# EUROPEAN PATENT SPECIFICATION

(11) **EP 4 153 482 B1**
(45) Date of publication and mention of the grant of the patent: **20.11.2024**
(21) Application number: 21727943.9
(22) Date of filing: 21.05.2021
(51) Int. Cl.: B64C 27/28, B64C 39/02, B64D 27/02, B64D 29/04, B64D 27/24, B64C 29/00, B64U 30/10, B64U 30/296, B64U 30/40, B64U 50/11, B64U 50/12, B64U 50/19, B64U 10/20

(54) **A VERTICAL TAKE-OFF AND LANDING AIRCRAFT, METHODS AND SYSTEMS FOR CONTROLLING A VERTICAL TAKE-OFF AND LANDING AIRCRAFT**
VERTIKAL STARTENDES UND LANDENDES FLUGZEUG, VERFAHREN UND SYSTEME ZUR STEUERUNG EINES VERTIKAL STARTENDEN UND LANDENDEN FLUGZEUGS
AÉRONEF À DÉCOLLAGE ET ATTERRISSAGE VERTICAUX, PROCÉDÉS ET SYSTÈMES DE COMMANDE D'UN AÉRONEF À DÉCOLLAGE ET ATTERRISSAGE VERTICAUX

(30) Priority: 22.05.2020 GB 202007673
(43) Date of publication of application: 29.03.2023
(73) Proprietor: Nelson Mandela University, 6031 Port Elizabeth (ZA)
(72) Inventor: PHILLIPS, Russell, 6070 Port Elizabeth (ZA); MOONEY, Paul Damian, 6045 Port Elizabeth (ZA)
(74) Representative: HGF
(86) International application number: PCT/IB2021/054430
(87) International publication number: WO 2021/234657

(56) References cited:
- EP-A1- 3 594 107
- WO-A1-2018/163156
- WO-A1-2019/056052
- CN-A- 107 244 415
- CN-A- 110 182 361
- US-A1- 2016 244 158
- US-A1- 2017 240 274

## Description

### FIELD OF INVENTION

THIS INVENTION relates to aerial vehicles or aircrafts, particularly to vertical take-off and landing aircrafts, and methods of and systems for controlling said aircrafts.

### BACKGROUND OF THE INVENTION

Aircrafts or aerial vehicles have been used for decades to aerially transport payloads weighing hundreds of kilograms from one location to another, for example, locations which are spread out by many hundreds if not thousands of kilometres.

One conventional fixed wing aircraft generally includes a fuselage terminating at a rear thereof in an empennage with a pair of fixed wings comprising flanking said fuselage and extending transversely to a longitudinal axis of the aircraft. Instead of an empennage configuration, some fixed wing aircrafts have a canard configuration wherein a canard is provided adjacent a front of the aircraft fuselage. A suitable propulsion assembly comprising one or more engines, particularly internal combustion engine/s, generally provides forward propulsion to the aircraft so that the wings, which are aerofoil shaped, provides suitable lift to the aircraft after reaching a particular speed on the ground. Despite being a simple and reliable means to lift large and heavy payloads at a relatively low cost of fuel, conventional fixed wing aircrafts of the type mentioned above require relatively long runways in order to reach the speeds required to achieve desired lift to render these aircrafts airborne. This makes it difficult for use in densely populated areas. Moreover, payloads are difficult to deploy with conventional fixed wing aircrafts due to the forward velocity thereof, in use.

To this end, vertical take-off, and landing (VTOL) vehicles or aircrafts advantageously remove the requirement of requiring a runway in order to become airborne and are able to lift and deploy payloads to locations in a relatively precise fashion with little or zero forward velocity. VTOL aircrafts are generally either manned or unmanned and are capable of both vertical and horizontal flight. In particular, these aircrafts take-off and land vertically and are capable of horizontal flight once airborne.

A helicopter is an example embodiment of a manned VTOL aircraft with a fuselage coupled to a suitable propulsion assembly comprising one or more internal combustion engines coupled to one or more rotors which provide lift and thrust to the helicopter. Helicopters are able to lift payloads of medium size and/or weight and deploy said payloads at end locations with little to no forward velocity due to the helicopter's ability to hover. However, helicopters generally have no redundancy for mechanical failure, have high power consumption throughout flight, have short ranges due to low speed and high-power demand, and have complex mechanics with high risks of failure.

Unmanned aerial vehicles (UAVs) having VTOL capabilities such as multirotor aircrafts typically comprise an array of electric motors coupled to the fuselage and are able to lift generally heavy payloads and deploy said payloads at end locations with little to no forward velocity due to the multirotor aircraft's ability to hover. The electric motors are generally powered by re-chargeable battery banks and thus have a limited flight time due to the storage capacity of current battery technology. Moreover, multirotor aircrafts generally have high power consumption throughout flight and fly with a relatively low flight speed which, coupled with the limited flight time, results in multirotor aircrafts having a relatively low range.

Hybrid aircrafts which comprise both internal combustion and electrically driven rotors are known. For example, US 2019/263519 A1 discloses a hybrid aircraft or drone comprising both an internal combustion as well as electrically driven rotors wherein the internal combustion engine is configured to provide vertical flight of the hybrid aircraft in addition to the electric rotors so as to increase the endurance or the amount of time which the aircraft is capable of being in the air, which is conventionally hindered by battery storage capacity of batteries which power the electric rotors. Though addressing the endurance problem posed by the use of electric motors, the hybrid aircraft disclosed in US 2019/263519 A1 does not attempt to maximise a payload which the hybrid aircraft can carry and transport which is important for at least commercial and resource saving perspectives.

EP 3 116 781 A1 discloses a hybrid unmanned aerial multirotor aircraft which has both internal combustion engine and electrically driven rotors and has improved DC power supply systems. Like US 2019/263519, the disclosure of EP 3 116 781 A1 makes use of an internal combustion engine to address the endurance problem associated with electrically driven rotors. However, the disclosure of EP 3 116 781 A1 couples an alternator to a fuel consuming internal combustion engine to power a DC power supply system which in turn drives the electric rotors.

Other hybrid aerial vehicles or aircrafts such as those disclosed in US 2017/300066 A1 and WO 2019/190263, disclose various hybrid arrangements which make use of internal combustion and electrically driven rotors to address a problem of stability and endurance of aircrafts with only electrically driven rotors.

Many other prior art aircrafts are also known to the Applicant but none disclose the features disclosed herein. For example, WO 2019/056052 A1 discloses an aircraft which has electric motors mounted to the wings which are configured to pivot between first and second vertical and horizontal positions.

EP 3 594 107 A1 discloses an aircraft which has stowable main propellers mounted to a wing, which are configured to pivot with the main wing, and a cruise propeller mounted to the tail and configured to pivot with the tail.

WO 2018/163156 discloses a multirotor aircraft which has vertical rotors, a fixed horizontal rotor, and a free wing which is rotatable around its longitudinal axis.

CN 107244415 A discloses an aircraft which comprises a plurality of vertical rotors and a pivotable front rotor.

CN 110182361 A discloses an aircraft having a plurality of vertical rotors and a horizontal rear rotor, wherein the vertical rotors located at a front end of the aircraft are pivotable to be horizontal.

US 2017/0240274 A1 discloses a propulsion system for an aircraft which has first and second propulsion units, wherein the rotor is pivotable between horizontal and vertical modes and is operatively couplable to the first and second propulsion units in an independent fashion, in use.

US 2016/0244158 A1 discloses an aircraft having a tiltable wing and tail with electric motors and propellers operatively attached to the same, wherein some of the propellers are fixed pitch propellers and some of the propellers are variable pitch propellers.

One drawback which the Inventors have identified with conventional hybrid aircrafts of the type mentioned herein is that they do not address the problem of maximising payload capacity of the aircrafts. A primary object of the present invention as disclosed herein is to maximise the payload which a hybrid aircraft can transport as to provide a different hybrid aircraft.

For brevity, in the context of the present document, the terms "aircraft", "aerial vehicle", and "drone" will be understood to mean the same thing.

### SUMMARY OF THE INVENTION

According to one aspect of the invention, there is provided a vertical take-off and landing (VTOL) aircraft, wherein the aircraft comprises:
an airframe having at least one or at least a pair of wing/s extending along a transverse axis, the wing/s being operatively attached to a fuselage having leading and trailing ends extending between a longitudinal axis of the aircraft, and an empennage located adjacent the trailing end of the fuselage or a canard located adjacent the leading end of the fuselage;
an array of electric rotors mounted to the airframe operatively to provide vertical stability and/or lift stability to the aircraft, wherein the electric rotors are fixedly mounted to the airframe and are driven by one or more suitable electric motor/s;
a front rotor pivotably mounted to the leading end of the fuselage, wherein the front rotor is displaceable about an axis parallel to the transverse axis between a lift position in which the front rotor is oriented to provide vertical lift to the aircraft for vertical flight, and a propulsion position in which the front rotor is oriented to provide forward thrust to the aircraft for horizontal flight; and
a rear rotor pivotably mounted to the trailing end of the fuselage , wherein the rear rotor is displaceable about an axis parallel to the transverse axis between a lift position in which the rear rotor is oriented to provide vertical lift to the aircraft for vertical flight, and a propulsion position in which the rear rotor is oriented to provide forward thrust to the aircraft for horizontal flight, wherein one or both of the front and rear rotor/s are driven by one or more suitable internal combustion (IC) engine/s, and wherein the front and rear rotors provide a majority, or all, of the vertical lift to the aircraft during vertical flight with the front and rear rotors in the lift position.

The front rotor may be pivotably mounted between the fuselage and the canard; or wherein the rear rotor may be pivotably mounted between the fuselage and the empennage. In this way, in the case of a canard configuration, the front rotor is freely displaceable in a pivot fashion in a zone between the canard and the front end of the fuselage. Similarly, in the case of an empennage configuration, the rear rotor is freely displaceable in a pivot fashion in a zone between the empennage and the rear end of the fuselage.

The aircraft disclosed herein may be an unmanned aerial aircraft.

The front and rear rotors may be configured to provide primary vertical lift to the aircraft, and wherein the electric rotors may be configured to provide primary stability to the aircraft at least during vertical flight. The electric rotors may be configured to provide secondary vertical lift to the aircraft. However, second vertical lift may be almost negligible. In order words, the majority, or all, of the vertical lift may be provided by the front and rear rotors with the electric rotors providing stability. It will be appreciated that the electric rotors may provide stability during hover manoeuvres.

The array of electric rotors may be mounted to the airframe in a spaced apart configuration, wherein the electric rotors are operatively coplanar and are located in a first plane, and wherein the front and rear rotors are located in second and third planes which are substantially co-planar with and/or are parallel to the first plane when the front and rear rotors are operated to the lift positions, in use. In one example embodiment, the second and third planes may sandwich the first plane. In one example embodiment, the first, second and third planes may be parallel and spaced apart at different elevations along the vertical axis.

In one example embodiment, the front and rear rotors may be configured to rotate in opposite directions. In this way, their resultant torque amount the vertical axis is zero, thereby allowing for yaw stability and control during hovering.

The aircraft may comprise a front IC engine drivingly connected to the front rotor and a rear IC engine drivingly connected to the rear rotor, wherein the front and rear engines, like the front and rear rotors are located adjacent opposite spaced apart leading and trailing ends of the fuselage. The internal combustion engines may be configured to combust high energy density fuel. In one example embodiment, the engine may be a fuel burning internal combustion engine. The fuel may be petrol so that the engine may be a petrol internal combustion engine. However, fuel may be any combustible fuel which is configured to drive an internal combustion engine. The front and rear rotors may be longitudinally spaced apart.

In other example embodiments, the aircraft may comprise one or more IC engine drivingly connected to both the front and rear rotors.

The front and rear engines may be equidistantly located from a centre of gravity of the aircraft along the longitudinal axis. Moreover, the thrust of the front and rear rotors providing the lift described herein may be matched. In this way, the matched thrust from the front and rear rotors located equidistantly from the centre of gravity of the aircraft imparts no pitch or roll force on the aircraft.

Each of the front and rear rotors may be at least twice as powerful as one of the electric rotors. In many cases, the front and rear rotors may be many times more powerful than the electric rotors.

It will be noted that the majority of the thrust (75-100%) for vertical flight may be provided by the front and rear rotors. Providing the front and rear rotors that are powered by internal combustion engines for vertical flight is advantageous due to the high power to weight ratio (kW.hrs/kg) of internal combustion engines as well as their fuel. The electric rotors may be coupled to one or more electric cells or batteries which provide between approximately five and fifteen minutes of operation to the array of electric rotors. In one example embodiment, it is approximately five minutes which results in five minutes of vertical flight time.

Differently defined, the electric rotors are powered by an electrical power source (for example, the batteries described herein) which is configured to power the electric rotors for a duration of time which is less than a duration of time which the front and rear rotors are capable of being powered by the one or more internal combustion engine/s. The total operation time of the electric rotors may be a small portion of the flight time of the aircraft in a particular mission wherein the front and rear rotors are powered for the duration of the flight time of the mission. Since the electric rotors provide mainly stability, there is no need to have them be provided with battery power to operate for the entirety of a mission but only for vertical flight. This therefore reduces the size of the batteries required to power the electric rotors and thus maximised the payload which the aircraft may transport, in use.

The array of electric rotors may comprise a plurality of electric rotors attached to one or more of the fuselage, wing/s, winglet/s, fin/s, empennage or canard, and one or more booms of the airframe. The electric rotors may be equidistantly located and/or attached to the airframe.

The size or power of the electric motors may be inversely proportional to the distance from a centre of gravity of the aircraft. In this regard, the further the electric motors are from the centre of gravity of the aircraft, the smaller and/or less powerful they would be than if they were closer to the centre of gravity of the aircraft. In this regard, the front and rear rotors of the aircraft may be closer to the centre of gravity of the aircraft than the electric rotors. The array of electric rotors may comprise substantially similar electric rotors.

In one example embodiment, the array of electric rotors may comprise four electric rotors located adjacent corners of an imaginary quadrilateral centrally located on the airframe. The quadrilateral may be a square such that the electric rotors are equidistantly spaced from each other so as to balance the same.

It will be noted that the aircraft may comprise four 3-Phase AC electric motors, each drivingly connected to each electric rotor. The DC battery power may be converted to AC by means of an ESC (Electronic speed controller). In some example embodiments, the aircraft may comprise more than four motors and/or rotors. For example, the aircraft may comprise six or eight electric motors drivingly connected to six or eight rotors, respectively. The electric motors may be powered from an energy storage device such as a rechargeable battery, e.g., a lithium-ion battery. Lithium-Ion batteries and brushless motors have an advantage over IC motors burning fuel, in that they have a very high instantaneous energy density W/kg. However, they have a very low total energy density kW.hrs/kg. It follows that due to the relatively low energy density, larger batteries are required for longer use and the weight of these larger batteries reduces the aircraft payload capability. In this regard, using high energy density fuel and the internal combustion powered rotors for as much of the flight as possible advantageously reduces the requirement for larger and heavier batteries.

For brevity, the term "rotor" as used herein may be understood to be the propeller blade/s which, in the case of the electric rotors, are driven by suitable AC motor/s which are powered by batteries, and in the case of the front and rear rotors are driven by suitable IC engine/s which combust fuel. However, where the context is evident, it will be understood to those skilled in the art that the term "rotor" may be understood to include propeller blade/s as well as the motor/s and/or engine/s drivingly connected to the propeller blade/s.

Electric motors have sufficient torque and response times to change their revolutions per minute (RPM) accurately and rapidly to maintain stability during vertical flight. In this way, the aircraft is able to maintain rapid and continuous corrections needed for a stable vertical flight. This is unlike the internal combustion engines which have slow response times to throttle changes and would not be able to maintain stability in a multirotor configuration. The configuration described herein thus maximises the thrust and lift advantages of IC rotors and engines and finer control profiles of the electric rotors and motors so that the electric rotors are not burdened by the relatively heavy IC rotors during lift as the IC rotors provide most of the thrust. Similarly, the slow response of the IC rotors in stabilising the aircraft during vertical flight is catered for by the more accurately controlled electric motors. In this way, the internal combustion (IC) front and rear rotors lift the aircraft and the much smaller electric motors balance it. This means that the electric motors can be very small and very light with smaller power cells (e.g., their lithium-ion batteries can be sized to be just adequate for a short period of hover, for example, approximately 2 minutes, etc.). It follows that when the aircraft transitions to forward flight as a normal fixed wing aircraft, it is carrying very little weight penalty with it in the form of electric hover motors. This feature enables a higher payload to be carried for longer distances over a longer period of time (longer endurance).

The aircraft may comprise a suitable processor configured to:
receive and/or intercept aircraft control signals comprising lift and/or stability commands to the array of electric rotors and/or the front and rear rotor to control lift and/or stability of the aircraft during vertical flight, respectively; and
use the lift commands to control the front and rear rotors to provide a majority, or all, of the vertical lift to the aircraft during vertical flight, and
use the stability commands to control the array of electric rotors to provide stability to the aircraft during vertical flight.

The processor may be an on-board processor of the aircraft. The processor may be configured to intercept control signals from a flight control module of the aircraft operable to control at least vertical flight.

As mentioned herein, the term "vertical flight" may be understood to include vertical flying (i.e., radially outwardly from the centre of the Earth) as well as hover and hovering manoeuvres (i.e. staying relatively spatially stationary mid-air). In some example embodiments, the array of electric rotors are only engaged during hover and/or hover manoeuvres of vertical flight to provide stability to the aircraft.

The processor may be configured to:
process the received/intercepted aircraft control signals to determine the lift and/or stability commands; and
separate the lift and/or stability commands for use in controlling the array of electric rotors and/or the front and rear rotors.

In one example embodiment of the invention, the processor is configured to receive information from sensors selected from a group comprising pitot tube, a tachometer, an accelerometer, a gyroscope, a magnetometer, a Global Positioning System (GPS), a thermocouple, and an altimeter.

The processor may be configured to generate suitable control signals comprising the lift and/or stability commands. The control signals may control the array of electric rotors and/or the front and rear rotor. To this end the processor may be configured to translate the lift commands to commands configured to control the throttles of the IC engines so as to provide a desired lift required. This is because the aircraft control signals to control vertical flight may only be meant for electric motors.

In one example embodiment, the front and rear rotors may be mounted to the fuselage via vectoring control mounts which facilitate vectoring control of the front and rear rotors between the lift and propulsion positions. The vectoring control mounts may be identical although one pivots/tilts upwards and one pivots/tilts downward. The upward pivoting/tilting mount may be operatively connected to the fuselage and the front rotor so as to pivot the front rotor upward, in use. The downward pivoting/tilting mount may be operatively connected to the fuselage and the rear rotor so as to pivot the rear rotor downward, in use. Each control mount may comprise a suitable rack and pinion mount configured to be actuated by a suitable actuator such as a servomotor to accurately displace the front and rear rotors, in use between the lift and propulsion positions. The control mounts may facilitate locking of the front and rear rotors to desired positions between and including the lift and propulsion positions.

The vectoring control mount operatively connecting the front rotor to the fuselage may be configured to pivot the front rotor upward to the lift position from the propulsion position. Conversely, the vectoring control mount operatively connecting the rear rotor to the fuselage may be configured to pivot the rear rotor downward to the lift position from the propulsion position. In this way the front rotor is located in the second plane above the wing/s, and the rear rotor is located in the third plane below the wing/s, when the aircraft is in vertical flight.

The rear rotor may be in a pusher configuration for horizontal flight and may be vectored downward during vertical flight. The rear rotor may pass under the empennage, or a plane defined thereby, during displacement to the lift position.

For clarity, the transverse axis may be a pitch axis of the aircraft, or an axis parallel to the pitch axis. Similarly, the longitudinal axis may be a roll axis. A vertical axis as described herein may be parallel to the axes about which the electric rotors rotate, and the front and rear rotors rotate when in the lift position, and may be a yaw axis, or an axis parallel to the yaw axis, of the aircraft.

In one example embodiment, the front and rear rotors may be slightly offset from a vertical axis in an anticlockwise direction about the longitudinal axis as viewed from the front of the aircraft. In particular, the front and rear rotors may be slightly inclined from a vertical axis by approximately 1.8 degrees in an anticlockwise direction about the longitudinal axis as viewed from a front of the aircraft. This configuration counters any yaw influence caused by asymmetric airflow over the aircraft due to the proximity of the IC rotor and/or their associated IC motors to the empennage.

According to another aspect of the invention, there is provided a method of controlling a vertical take-off and landing (VTOL) aircraft comprising an airframe having at least one or at least a pair of wing/s extending along a transverse axis, the wing/s being operatively attached to a fuselage having leading and trailing ends extending between a longitudinal axis of the aircraft, and an empennage located adjacent the trailing end of the fuselage or a canard located adjacent the leading end of the fuselage; an array of electric rotors mounted to the airframe operatively to provide vertical stability and/or lift to the aircraft, wherein the electric rotors are fixedly mounted to the airframe and are driven by one or more suitable electric motor/s; a front rotor pivotably mounted to the leading end of the fuselage, wherein the front rotor is displaceable about an axis parallel to the transverse axis between a lift position in which the front rotor is oriented to provide vertical lift to the aircraft for vertical flight, and a propulsion position in which the front rotor is oriented to provide forward thrust to the aircraft for horizontal flight; and a rear rotor pivotably mounted to the trailing end of the fuselage, wherein the rear rotor is displaceable about an axis parallel to the transverse axis between a lift position in which the rear rotor is oriented to provide vertical lift to the aircraft for vertical flight, and a propulsion position in which the rear rotor is oriented to provide forward thrust to the aircraft for horizontal flight, wherein one or both of the front and rear rotors are driven by one or more suitable internal combustion engines, wherein the method comprises:
controlling the front and rear rotors to be displaceable between the propulsion positions for horizontal flight and lift positions for vertical flight; and
controlling the front and rear rotors to provide a majority, or all, of the vertical lift to the aircraft during vertical flight with the front and rear rotors in the lift position.

The method may comprise the steps of:
receiving and/or intercepting aircraft control signals comprising lift and/or stability commands to control the lift and/or stability of the aircraft during vertical flight;
controlling the front and front rotors by using the lift commands to provide a majority, or all, of the vertical lift to the aircraft during vertical flight, and
controlling the array of electric rotors by using the stability commands to provide stability to the aircraft during vertical flight.

In addition, the method may comprise:
processing the received/intercepted aircraft control signals to determine the lift and/or stability commands; and
separating the lift and/or stability commands for use in controlling the array of electric rotors and/or the front and rear rotors.

The method may comprise the step of intercepting the aircraft control signals from a suitable flight controller meant to control only electric motors and/or rotors. To this end, the method may comprise translating the lift commands to a format to control the front and rear rotors.

The array of electric rotors may be mounted to the airframe in a spaced apart configuration, wherein the electric rotors are operatively coplanar and are located in a first plane, wherein the method comprises displacing the front and rear rotors to the lift positions for vertical flight, wherein in the lift positions the front and rear rotors are located in second and third planes respectively which are substantially co-planar with and/or are parallel to the first plane when the front and rear rotors are operated to the lift positions.

According to another aspect of the invention, there is provided a control system for controlling a vertical take-off and landing (VTOL) aircraft comprising an airframe having at least one or at least a pair of wing/s extending along a transverse axis, the wing/s being operatively attached to a fuselage having leading and trailing ends extending between a longitudinal axis of the aircraft, and an empennage located adjacent the trailing end of the fuselage or a canard located adjacent the leading end of the fuselage; an array of electric rotors mounted to the airframe operatively to provide vertical lift stability and/or lift to the aircraft, wherein the electric rotors are fixedly mounted to the airframe and are driven by one or more suitable electric motors; a front rotor pivotably mounted to the leading end of the fuselage, wherein the front rotor is displaceable about an axis parallel to the transverse axis between a lift position in which the front rotor is oriented to provide vertical lift to the aircraft for vertical flight, and a propulsion position in which the front rotor is oriented to provide forward thrust to the aircraft for horizontal flight; and a rear rotor pivotably mounted to the trailing end of the fuselage, wherein the rear rotor is displaceable about an axis parallel to the transverse axis between a lift position in which the rear rotor is oriented to provide vertical lift to the aircraft for vertical flight, and a propulsion position in which the rear rotor is oriented to provide forward thrust to the aircraft for horizontal flight, wherein one or both of the front and rear rotors are driven by one or more suitable internal combustion engine/s, wherein the system comprises:
a memory device;
a processor coupled to the memory device, the processor being configured to:
   control the front and rear rotors to be displaceable between the propulsion positions for horizontal flight and lift positions for vertical flight; and
   control the front and rear rotors to provide a majority, or all, of the vertical lift to the aircraft during vertical flight with the front and rear rotors in the lift position.

The processor may be configured to:
receive and/or intercept aircraft control signals comprising lift and/or stability commands to control the lift and/or stability of the aircraft during vertical flight;
control the front and front rotors by using lift commands to provide a majority, or all, of the vertical lift to the aircraft during vertical flight, and
control the array of electric rotors by using the stability commands to provide stability of the aircraft during vertical flight.

The processor may be configured to:
process the received/intercepted aircraft control signals to determine the lift and/or stability commands; and
separate the lift and/or stability commands for use in controlling the array of electric rotors and/or the front and rear rotors.

The processor may further be configured to translate the lift commands to a format to control the front and rear rotors. The array of electric rotors may be mounted to the airframe in a spaced apart configuration, wherein the electric rotors are operatively coplanar and are located in a first plane, wherein the processor is configured to displace the front and rear rotors to the lift positions for vertical flight, wherein in the lift positions the front and rear rotors are located in second and third planes respectively which are substantially co-planar with and/or are parallel to the first plane when the front and rear rotors are operated to the lift positions.

According to yet another example embodiment of the invention, there is provided a non-transitory computer readable storage medium storing non-transitory computer executable instructions which when executed by a suitable processor remotely in communication with or on-board a vertical take-off and landing (VTOL) aircraft comprising an airframe having at least one or at least one pair of wing/s extending along a transverse axis, the wing/s being operatively attached to a fuselage having leading and trailing ends extending between a longitudinal axis of the aircraft, and an empennage located adjacent the trailing end of the fuselage or a canard located adjacent the leading end of the fuselage; an array of electric rotors mounted to the airframe operatively to provide vertical stability and/or lift to the aircraft, wherein the electric rotors are fixedly mounted to the airframe and are driven by one or more suitable electric motor/s; a front rotor pivotably mounted to the leading end of the fuselage, wherein the front rotor is displaceable about an axis parallel to the transverse axis between a lift position in which the front rotor is oriented to provide vertical lift to the aircraft for vertical flight, and a propulsion position in which the front rotor is oriented to provide forward thrust to the aircraft for horizontal flight; and a rear rotor pivotably mounted to the trailing end of the fuselage, wherein the rear rotor is displaceable about an axis parallel to the transverse axis between a lift position in which the rear rotor is oriented to provide vertical lift to the aircraft for vertical flight, and a propulsion position in which the rear rotor is oriented to provide forward thrust to the aircraft for horizontal flight, wherein one or both of the front and rear rotors are driven by one or more suitable internal combustion engine/s, causes the at least one processor to perform the method steps as described above.

According to yet another example embodiment of the invention, there is provided a method of controlling a vertical take-off and landing (VTOL) aircraft, wherein the method comprises:
receiving and/or intercepting aircraft control signals comprising lift and/or stability commands to control the lift and/or stability of the aircraft during vertical flight;
processing the received/intercepted aircraft control signals to determine the lift and/or stability commands;
separating the lift and/or stability commands;
translating the lift commands to a format to control one or more internal combustion (IC) rotors driven by one or more internal combustion engine/s;
generating suitable lift command signals containing the translated lift commands to control the one or more IC rotors to provide a majority, or all, of the vertical lift to the aircraft during vertical flight, and
generating suitable stability command signals containing the separated stability commands to control an array of electric rotors to provide stability to the aircraft during vertical flight.

According to another aspect of the invention, there is provided a system of controlling a vertical take-off and landing (VTOL) aircraft, wherein the system comprises:
a memory device; and
at least one processor configured to:
   receive and/or intercept aircraft control signals comprising lift and/or stability commands to control the lift and/or stability of the aircraft during vertical flight;
   process the received/intercepted aircraft control signals to determine the lift and/or stability commands;
   separate the lift and/or stability commands;
   translate the lift commands to a format to control one or more internal combustion (IC) rotors driven by one or more internal combustion engine/s;
   generate suitable lift command signals containing the translated lift commands to control the one or more IC rotors to provide a majority, or all, of the vertical lift to the aircraft during vertical flight, and
   generate suitable stability command signals containing the separated stability commands to control an array of electric rotors to provide stability to the aircraft during vertical flight.

According to another aspect of the invention, there is provided a non-transitory computer readable storage medium storing non-transitory computer executable instructions which when executed by a suitable processor, causes the processor to:
receive and/or intercept aircraft control signals comprising lift and/or stability commands to control the lift and/or stability of the aircraft during vertical flight;
process the received/intercepted aircraft control signals to determine the lift and/or stability commands;
separate the lift and/or stability commands;
translate the lift commands to a format to control one or more internal combustion (IC) rotors driven by one or more internal combustion engine/s;
generate suitable lift command signals containing the translated lift commands to control the one or more IC rotors to provide a majority, or all, of the vertical lift to the aircraft during vertical flight, and
generate suitable stability command signals containing the separated stability commands to control an array of electric rotors to provide stability to the aircraft during vertical flight.

According to another aspect of the invention, there is provided an aircraft comprising a system as described herein operatively connected thereto.

According to yet another aspect of the invention, there is provided a method of operating a hybrid aircraft comprising electric rotors and internal combustion rotors, wherein the electric rotors are driven by electrical motors and the internal combustion rotors are driven by internal combustion engines, wherein the method comprises:
using both the internal combustion rotors and electric rotors for vertical flight; and
using the internal combustion rotors for horizontal flight.

It will be understood that descriptions herein pertaining to one aspect of the invention applies, *mutatis mutandis,* to other aspects of the invention.

### BRIEF DESCRIPTION OF THE DRAWINGS

- **Figure 1**: shows a perspective view from the front of a VTOL aircraft in accordance with an example embodiment of the invention with front and rear rotors configured for vertical flight;
- **Figure 2**: shows a perspective view from the rear of a VTOL aircraft in accordance with an example embodiment of the invention with front and rear rotors configured for vertical flight;
- **Figure 3**: shows a side view of a VTOL aircraft in accordance with an example embodiment of the invention with front and rear rotors configured for vertical flight, the opposite side view having a similar profile;
- **Figure 4**: shows a rear view of a VTOL aircraft in accordance with an example embodiment of the invention with front and rear rotors configured for vertical flight;
- **Figure 5**: shows a front view of a VTOL aircraft in accordance with an example embodiment of the invention with front and rear rotors configured for vertical flight;
- **Figure 6**: shows a top or plan view of a VTOL aircraft in accordance with an example embodiment of the invention with front and rear rotors configured for vertical flight;
- **Figure 7**: shows a bottom view of a VTOL aircraft in accordance with an example embodiment of the invention with front and rear rotors configured for vertical flight;
- **Figure 8**: shows a perspective view from the front of a VTOL aircraft in accordance with an example embodiment of the invention with front and rear rotors configured for horizontal flight;
- **Figure 9**: shows a perspective view from the rear of a VTOL aircraft in accordance with an example embodiment of the invention with front and rear rotors configured for horizontal flight;
- **Figure 10**: shows a side view of a VTOL aircraft in accordance with an example embodiment of the invention with front and rear rotors configured for horizontal flight, the opposite side view having a similar profile;
- **Figure 11**: shows a rear view of a VTOL aircraft in accordance with an example embodiment of the invention with front and rear rotors configured for horizontal flight;
- **Figure 12**: shows a front view of a VTOL aircraft in accordance with an example embodiment of the invention with front and rear rotors configured for horizontal flight;
- **Figure 13**: shows a perspective view of a vectoring control mount in accordance with an example embodiment of the invention with front and rear rotors configured for horizontal flight;
- **Figure 14**: shows a block diagram of a flight control system in accordance with an example embodiment of the invention;
- **Figure 15**: show a high-level block flow diagram of a method of controlling a VTOL aircraft in accordance with an example embodiment of the invention;
- **Figure 16**: shows another high-level block flow diagram of a method of controlling a VTOL aircraft in accordance with an example embodiment of the invention;
- **Figure 17**: shows a perspective view from the front of another VTOL aircraft in accordance with an example embodiment of the invention with front and rear rotors configured for vertical flight;
- **Figure 18**: shows a perspective view from the front of another VTOL aircraft in accordance with an example embodiment of the invention with front and rear rotors configured for vertical flight;
- **Figure 19**: shows a perspective view from the front of yet another VTOL aircraft in accordance with an example embodiment of the invention with front and rear rotors configured for vertical flight; and
- **Figure 20**: shows a diagrammatic representation of a machine in the example form of a computer system in which a set of instructions for causing the machine to perform any one or more of the methodologies discussed herein, may be executed.

### DETAILED DESCRIPTION OF THE DRAWINGS

The following description of the invention is provided as an enabling teaching of the invention. Those skilled in the relevant art will recognise that many changes can be made to the embodiment described, while still attaining the beneficial results of the present invention. It will also be apparent that some of the desired benefits of the present invention can be attained by selecting some of the features of the present invention without utilising other features. Accordingly, those skilled in the art will recognise that modifications and adaptations to the present invention are possible and may even be desirable in certain circumstances. Thus, the following description is provided as illustrative of the principles of the present invention and not a limitation thereof.

It will be appreciated that the phrase "for example," "such as", and variants thereof describe non-limiting embodiments of the presently disclosed subject matter. Reference in the specification to "one example embodiment", "another example embodiment", "some example embodiment", or variants thereof means that a particular feature, structure, or characteristic described in connection with the embodiment(s) is included in at least one embodiment of the presently disclosed subject matter. Thus, the use of the phrase "one example embodiment", "another example embodiment", "some example embodiment", or variants thereof does not necessarily refer to the same embodiment(s).

Unless otherwise stated, some features of the subject matter described herein, which are, described in the context of separate embodiments for purposes of clarity, may also be provided in combination in a single embodiment, as far as they fall within the scope of any one of the appended claims. Similarly, various features of the subject matter disclosed herein which are described in the context of a single embodiment may also be provided separately or in any suitable sub-combination, as far as they fall within the scope of any one of the appended claims.

The headings used herein are for organizational purposes only and are not meant to be used to limit the scope of the description or the claims. For brevity, the word "may" is used in a permissive sense (i.e., meaning "having the potential to"), rather than the mandatory sense (i.e., meaning "must").

The words "include," "including," and "includes" and the words "comprises", "comprising", and "comprises" mean including and comprising, but not limited to, respectively. Additionally, as used herein, the term "coupled" may refer to two or more components connected together, whether that connection is permanent (e.g., welded) or temporary (e.g., bolted, screwed), direct or indirect (i.e., through an intermediary), mechanical, chemical, optical, or electrical.

Furthermore, as used herein, "horizontal" flight refers to flight traveling in a direction substantially parallel to the ground (i.e., sea level), and that "vertical" flight refers to flight traveling substantially radially outward from the centre of the Earth. It should be understood trajectories may include components of both "horizontal" and "vertical" flight vectors. Moreover, the terms "hover" or "hovering" may be understood to mean remaining in substantially the same vertical and horizontal spatial position. "Vertical" flight in the context of the present disclosure will be understood to include "hover" and "hovering" as will be understood from the disclosure herein.

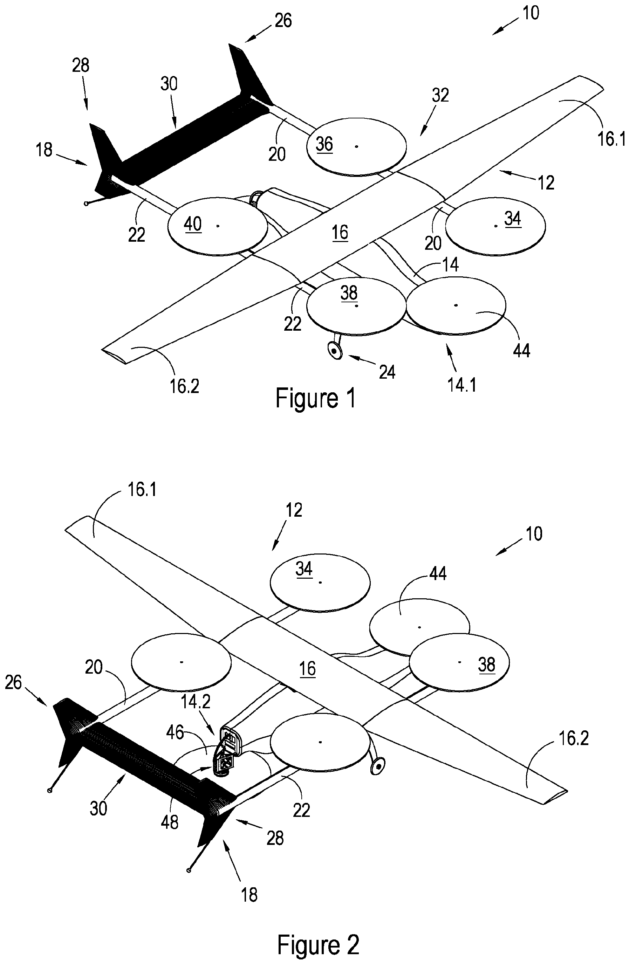

Referring to Figure 1 to 7 of the drawings where a VTOL aircraft in accordance with an example embodiment of the invention is generally indicated by reference numeral 10. The VTOL aircraft 10 may typically be an un-manned aerial vehicle but it will be appreciated that nothing in the present disclosure precludes extension of the teaching contained herein to manned aerial vehicles. The VTOL aircraft 10 is advantageously capable of vertical flight (including vertical take-off and landing, stable and stable hovering); as well as being capable of horizontal flight (including level fixed-wing flight) in order to carry and deliver payloads over distances. For example, a payload of approximately 50kg on a mission which is over a distance of approximately 50km from an originating destination to a delivery destination and return to the originating destination (i.e., a 100km return trip or mission).

Despite the aircraft 10 comprising a plurality of components (electrical, electronic, mechanical, pneumatic, and/or hydraulic), circuitry, actuators, mechanical linkages, and the like, for ease of illustration, these are not illustrated nor discussed in more detail but will be evident to a persons skilled in the field of invention.

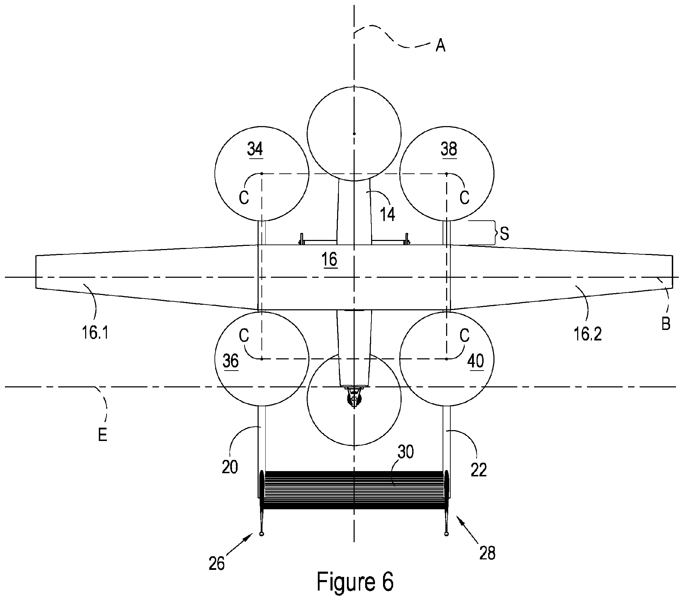

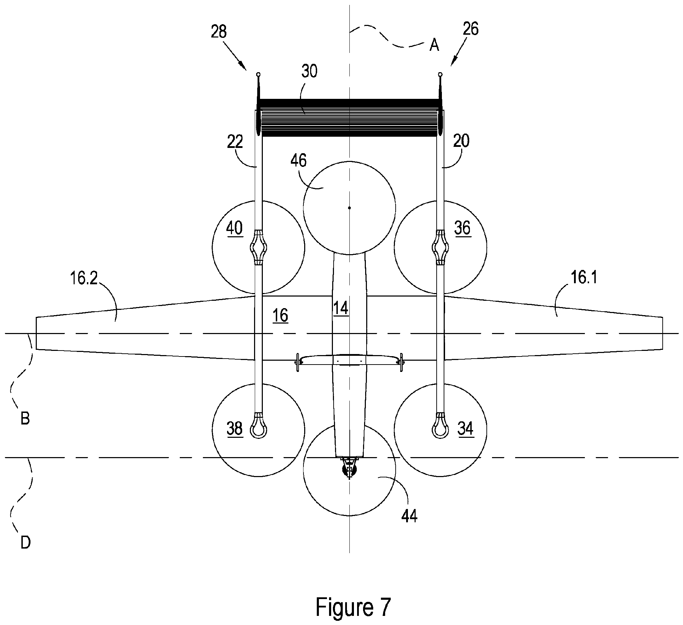

The aircraft 10 comprises an airframe 12 which includes a fuselage 14 extending along a longitudinal axis A (see Figures 6 and 7), an elongate fixed wing 16 extending along a transverse axis B (see Figures 6 and 7) attached centrally to the fuselage 14, and an empennage 18. The airframe 12 is mostly fabricated from composite lightweight material in order to minimise weight. For example, the airframe 12 is constructed of fibreglass and carbon fibre with a high-density polystyrene core.

The wing 16 has a left-wing portion 16.1 and a right-wing portion 16.2 which are equal in length. The wing 16 generally has a high aspect ratio and is in the form of an aerofoil to facilitate lift and thus flight of the aircraft 10 as described herein. The wing 16 may thus be in the shape of a conventional aircraft wing having top and bottom surfaces and leading and trailing edges which facilitate lift as air passes over the same, in use.

Though a single wing 16 is illustrated, it will be noted that two or more parts may be connected together to form the wing 16. In one example embodiment, left and right-wing portions 16.1, 16.2 are each attached independently of each other to the fuselage 14. Moreover, though not illustrated, it will be appreciated that in some example embodiments of the invention described herein, the wing 16 may comprise suitable controllable ailerons located in the left- and right-wing portions 16.1, 16.2, particularly adjacent trailing edges of the wing 16 for use in a conventional fashion.

The fuselage 14 has a body extending between a leading front end 14.1 and an opposite trailing rear end 14.2 along the longitudinal axis A. In the present example embodiment, the fuselage 14 is attached to a landing assembly 24 which facilitates the aircraft 10 engaging with the ground, for example, landing on a surface. The assembly 24 may comprise wheels in a conventional manner, for example, a pair of wheels. Instead, or in addition, the assembly 24 may be a fixed frame-like assembly as one would conventionally find on helicopters. The fuselage 14 may be configured to be attachable to a suitable harness to carry a payload, in use.

The empennage 18 is typically defined by a pair of spaced apart nacelle-like booms 20, 22 which are attached to the wing portions 16.1, 16.2 and extend along axes parallel to the longitudinal axis A, flanking the fuselage 14. The empennage 18 comprises a pair of spaced apart vertical stabilizers 26, 28 which are spanned by a horizontal stabilizer 30 connected therebetween.

The aircraft 10 further comprises an array 32 of electric rotors 34...40 which are drivingly connected to suitable electric motors (not shown). The aircraft 10 is thus a multirotor construction, particularly a quadrotor construction having four rotors 34... 40, each disposed on a corner C of an imaginary square S centred on the airframe 12. The rotor 34 may be a front left rotor 34, the rotor 36 may be a rear left rotor 36, the rotor 34 may be a front right rotor 38, the rotor 40 may be a rear right rotor 40.

The rotors 34...40 are each drivingly connected to a three-phase brushless AC electric motor which is capable of very precise speed and torque control. This makes the electric rotors 34...40 well suited for precise control to maintain hover stability. The motors are in turn powered by rechargeable batteries (not shown), for example, lithium-ion batteries. The rotors 34...40 and their batteries are small relative to the front and rear rotors (discussed below) so as to maximise the payload to be transported by the aircraft 10. Though not shown, in some example embodiments, the electric motors may be driven by power from an on-board fuel burning generator.

The rotors 34...40 may be controlled by suitable off-the-shelf flight controllers.

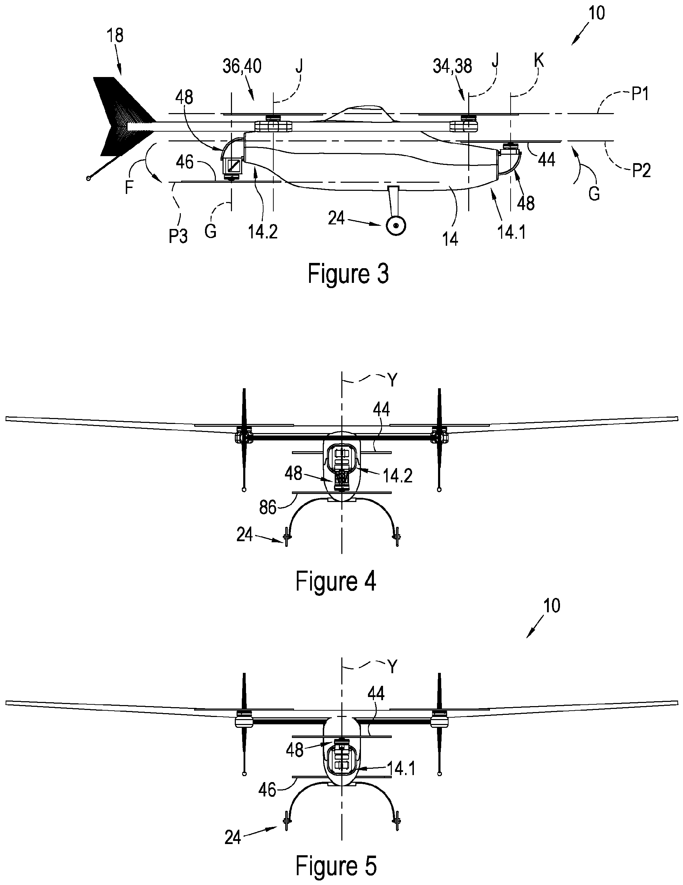

Though the electric motors are not illustrated, reference to and control of the electric rotors 34...40 will be understood to mean control of the electric motors which drive said electric rotors 34...40. For this reason, it will be noted that reference to the rotors 34...40 may include reference to the motors driving said rotors 34...40, unless otherwise stated. The rotors 34...40 rotate about axes being parallel to a vertical or yaw axis Y as illustrated in Figures 4 and 5.

The rotors 34...40 are mounted fixedly on the booms 20, 22 and provide vertical lift and/or stability to the aircraft 10, in use, as described herein. In particular, the rotors 34, 36 are mounted on boom 20 such that they sandwich the left-wing portion 16.1 when viewed from the top and bottom (see Figures 6 and 7), and the rotors 38, 40 are mounted on boom 22 such that they sandwich the right-wing portion 16.2 when viewed from the top and bottom (see Figures 6 and 7). Differently stated, the rotors 34, 36 are left rotors 34, 36 mounted on the left boom 20, whereas the rotors 38, 40 are right rotors 38, 40 mounted on the right boom 22. The motors which drive the rotors 34... 40 and the batteries which power the motors may form part of respective rotor assemblies and are mounted to the airframe 12 (not shown). The array 32 is typically located in a co-planar fashion. In particular, the rotors 34...40 are all operatively located in an operative first plane P1 in a co-planar fashion as can be seen better in Figure 3. The rotos 34...40 rotate about axes J centred on the rotors and parallel to the vertical axis Y (see Figure 3). The batteries of the rotor assemblies may be configured to provide at least 5 minutes of operation of the electric rotors 34...40 which results in less weight on the aircraft thereby to maximise the payload.

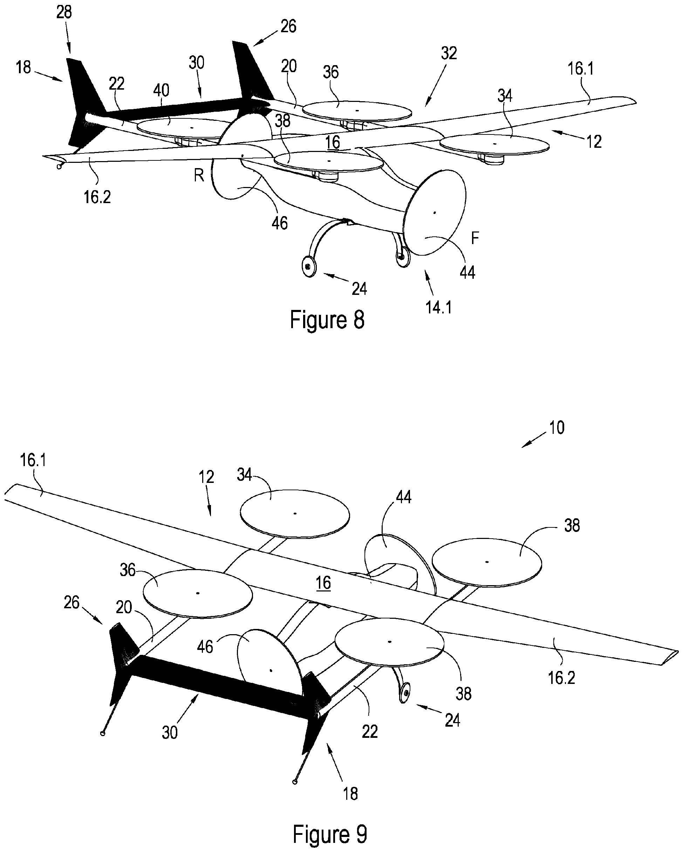

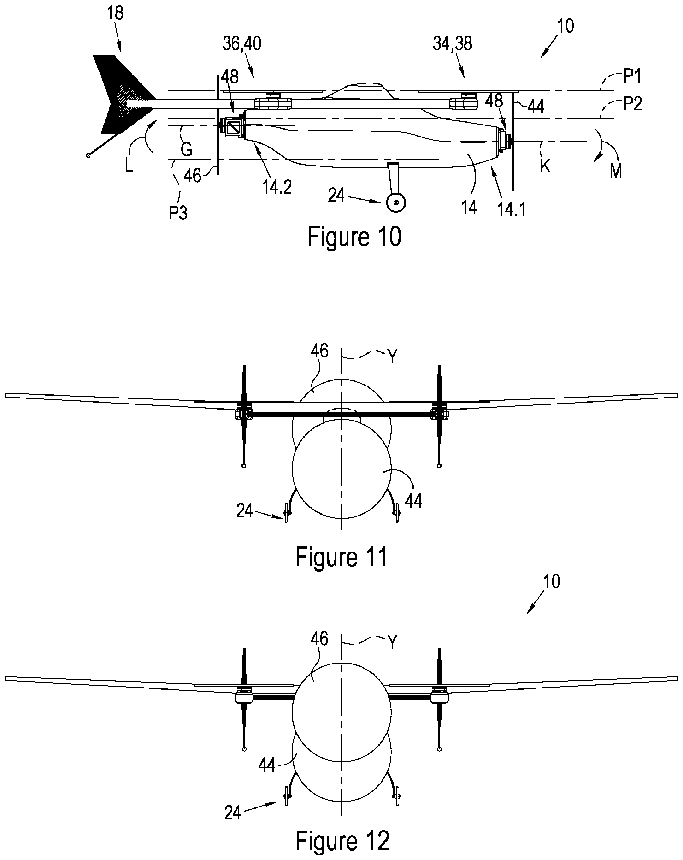

The aircraft 10 also comprises a front rotor 44 pivotably mounted to the leading end 14.1 of the fuselage 14. The front rotor 44 is displaceable, in particular pivotable, about an axis D (see Figure 7) which is parallel to the transverse axis B between a lift position as illustrated in Figures 1 to 7 in which the front rotor 44 is oriented to provide vertical lift to or of the aircraft 10 for vertical flight, and a propulsion position as illustrated in Figures 8 to 12 in which the front rotor 44 is oriented to provide forward thrust to the aircraft 10 for horizontal flight. In the lift position, an axis K (see Figure 3) about which the rotor 44 rotates is substantially parallel to the vertical or yaw axis Y as illustrated in Figure 4 and 5. In the propulsion position, an axis K about which the rotor 44 rotates is parallel to and/or aligned with the longitudinal axis A (see Figure 10).

The aircraft 10 further comprises a rear rotor 46 pivotably mounted to the trailing end 14.1 of the fuselage 14. The rear rotor 46 is displaceable, in particular pivotable, about an axis E (see Figure 6) which is parallel to the transverse axis B between a lift position as illustrated in Figures 1 to 7 in which the rear rotor 46 is oriented to provide vertical lift to or of the aircraft 10 for vertical flight, and a propulsion position as illustrated in Figures 8 to 12 in which the rear rotor 46 is oriented to provide forward thrust to the aircraft 10 for horizontal flight. In the lift position, an axis G (see Figure 3) about which the rotor 46 rotates is substantially parallel to the vertical or yaw axis Y as illustrated in Figure 4 and 5. In the propulsion position, the axis G about which the rotor 46 rotates is parallel to and/or or is aligned with the longitudinal axis A (see Figure 10). The rear rotor 46 is a pusher configuration for horizonal flight and is vectored downward in the direction of arrow F (see Figure 3) during vertical flight, passing under the empennage 18. This is opposed to the front rotor 44 which is a puller configuration for horizontal flight and is vectored upward in the direction of arrow G (see Figure 3) during vertical flight.

In the lift position, the rotor 44 is typically located in a second plane P2 (see Figure 3) which is at a lower elevation than the first plane P1. Similarly, in the lift position, the rotor 46 is located in a third plane P3 which is at a lower elevation than the second plane P2. Though imperceptible in the drawings, in one example embodiment, the front and rear rotors 44, 46 are slightly inclined from a vertical axis by approximately 1.8 degrees in an anticlockwise direction about the longitudinal axis as viewed from the front of the aircraft.

The rotors 44, 46 are driving connected to a pair of internal combustion (IC) motors or engines (not shown) which are capable of higher thrust than the electric rotors 34...40. In some example embodiments, the motors which drive the rotors 34...40 have less than half the power of the IC engines which drive the rotors 44, 46. In this way, the rotors 44, 46 provide a majority, or all, of the thrust and/or lift to the aircraft 10 during vertical flight whilst the rotors 34...40 provide stability control to the aircraft 10. In horizontal flight, the rotors 44, 46 provide all the driving thrust to propel the aircraft 10 with a lower fuel consumption due to its fixed wing construction (almost 1/6 of the fuel used by the rotors 44, 46 during vertical flight).

The IC engines are in communication with a fuel source such as a tank holding petrol. The IC motors are thus petrol engines. Though the IC engines are not illustrated, reference to and control of the rotors 44, 46 will be understood to mean control of the IC engines which drive said rotors 44, 46, for example, a throttle thereof. For this reason, it will be noted that reference to the rotors 44, 46 may include reference to the IC engines driving said rotors 44, 46, unless otherwise stated or evident to those skilled in the art. In some example embodiments, only the rotors 44, 46 drivingly connected to the IC engines are displaceable in the fashion described herein. However, nothing precludes displacement of parts or the entire IC engine and rotors 44, 46, as the case may be in the manner contemplated herein as a singular unit. The fuel supply, suitable throttle arrangement, transmission, etc. associated with the IC driven rotors 44, 46 may be attached to the airframe 12 in a balanced manner.

In order to balance the aircraft 10, the front and rear rotors 44, 46 are located equidistantly from a centre of gravity of the aircraft 10. Even the IC motors which drive the front and rear rotors 44, 46 spaced apart longitudinally along the axis A in an equidistant manner from the centre of gravity of the aircraft 10.

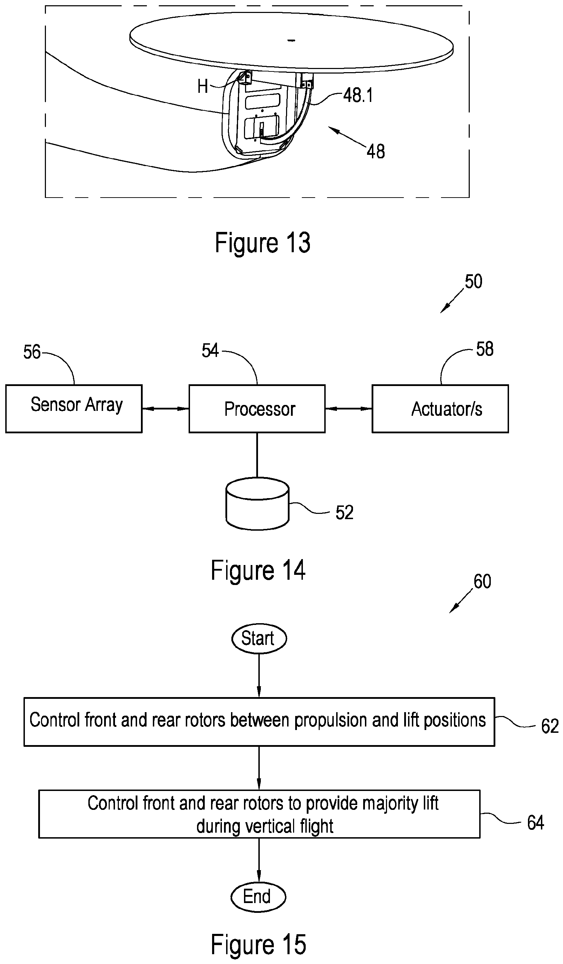

The front and rear rotors 44, 46 are typically mounted to the fuselage 14 via vectoring control mounts 48 which attach the rotors 44 ,46 to the fuselage 14 and are operable to vector the displacement of the rotors 44, 46 accurately between the propulsion and lift positions described herein and as illustrated in the accompanying representations. As can be seen in Figure 13, the mounts 48 are attachable to both the fuselage 14 and the rotors 44, 46 and are electronically controlled via suitable servomotors (not shown) to displace the rotors 44, 46. In particular, the mounts 48 comprise electrically driven rack and pinion assemblies connected to the fuselage 14 via a hinge joints H which allow the rotors 44, 46 and/or the IC engines to travel in an arc through 90 degrees which move the rotors 44, 46 from its original thrust line to a new position above or below the original thrust line as needed. The rack and pinion assemblies 48.1 (Figure 13) operating about the hinge H (Figure 13) allow for 3 points of triangulated support for the rotors 44, 46 with a high reduction drive ratio allowing for precise positioning of the rotors 44, 46 with the high torque available. The rotors 44, 46 may be attached to boom 48.2 which are controlled by the rack and pinion assemblies 48.1 of the mounts 48 to be pivotable about the hinge H.

Closed loop feedback sensor arrangements built into the control of the mounts 48 gives accurate feedback of the rotor 44, 46 orientation, particularly information indicative of its spatial co-ordinates (of the rotors 44, 46) or the extent of actuation of the mounts 48 which in turn are associated with the spatial orientation of the rotors 44, 46. In this way, the mounts 48 enable precise, reliable, and lockable displacement of the rotors 44, 46 between the lift and propulsion positions.

The rotors 34...40 and 44,46 each comprise one or more propeller blades which may be conventional blades. It will be understood that during horizontal flight, the rotors 34...40 are in an inoperative condition, i.e., not rotating during horizontal flight whereas the rotors 44, 46 are operative in both vertical and horizontal flight.

Referring now also to Figure 14 of the drawings where a control system for an aircraft, for example, the aircraft 10 described above is generally indicated by reference numeral 50. The system 50 typically controls the operation of the aircraft 10 and may thus be integrated into the airframe 12.

The system 50 comprises a memory storage device 52 and a processor 54 configured to perform various data processing and control operations associated with unmanned flight of the aircraft 10.

The processor 54 may be one or more processors in the form of programmable processors executing one or more computer programs to perform actions by operating on input data and generating outputs. The processor 54 may be any kind of electronic device with data processing capabilities including, by way of non-limiting example, a general processor, a graphics processing unit (GPU), a digital signal processor (DSP), a microcontroller, a field programmable gate array (FPGA), an application specific integrated circuit (ASIC), or any other electronic computing device comprising one or more processors of any kind, or any combination thereof. For brevity, steps described as being performed by the system 50 may be steps which are effectively performed by the processor 54 and vice versa unless otherwise indicated.

The memory storage device 52 may be in the form of computer-readable medium including system memory and including random access memory (RAM) devices, cache memories, non-volatile or back-up memories such as programmable or flash memories, read-only memories (ROM), etc. In addition, the device 52 may be considered to include memory storage physically located elsewhere in the system 10, e.g. any cache memory in the processor 52 as well as any storage capacity used as a virtual memory, e.g., as stored on a mass storage device.

The computer programs executable by the processor 54 may be written in any form of programming language, including compiled or interpreted languages, declarative or procedural languages, and can be deployed in any form, including as a stand-alone program or as a module, component, subroutine, object, or other unit suitable for use in a computing environment. The computer program can be deployed to be executed by one processor 54 or by multiple processors 54.

The computer programs may be stored in the memory store 52 or in memory provided in the processor 30. Though not illustrated or discussed herein, it will be appreciated by those skilled in the field of invention that the system 10 may comprise a plurality of logic components, electronics, driver circuits, peripheral devices, etc. not described herein for brevity.

The processor 54 is typically configured to receive sensor data from a sensor array 56 comprising a plurality of sensors configured to provide the processor 54 with data to enable the same to control the flight of the aircraft 10 and/or relay information to a ground station (not shown), in use. To this end the system 54 may comprise a suitable communication module, for example, a radio frequency communication module to facilitate communication between the aircraft 10 and the ground station, in use. Communication from the ground station may be to remotely control the aircraft 10, for example, to take-off and land vertically, hover, fly horizontally. In one example, embodiment, the processor 54 may be configured to receive commands from the ground control station and is configured to generate suitable control signals to control the actuators 58 of the aircraft 54 in response thereto in a conventional fashion. However, it will be understood that with the current configuration as disclosed herein even conventional commands such as a hover command received remotely by the processor 54 causes the same to generate suitable control signals to pivot the rotors 44, 46 in a manner described herein to provide primary thrust to the aircraft 10 and generate suitable control signals to control the rotors 34...40 to provide stability at the same time.

Instead, or in addition, the processor 54 is configured to relay flight information to the ground control station for monitoring processes on the ground, in addition to flight planning and override controls.

The sensor array 56 may comprise sensors selected from a group comprising: a pitot tube, a tachometer, an accelerometer, a gyroscope, a magnetometer, a Global Positioning System (GPS), a thermocouple, and an altimeter. The sensor array 56 may provide data associate with the respective sensor to the processor 54 to control the actuators 58. The processor 54 is configured to generate suitable control signals to control actuators 58 selected from a group comprising the pair of IC engines which drive the rotors 44, 46; vectoring control mounts 48 which displace the rotors 44, 46 between propulsion and lift positions; electric motors which drive the rotors 34...40; and conventional aircraft flight components such as ailerons, elevators, rudders, etc.

The processor 54 may comprise a suitable flight controller processor or may be in communication with a suitable flight controller processor which is configured to control the flight, particularly hovering manoeuvres of the aircraft 10 in a conventional fashion. For hovering manoeuvres, these flight controllers run feedback loops which receive data from a plurality of sensors and generate aircraft control signals to control the rotors of the aircraft 10 by way of suitable thrust and stabilizing commands. In one example embodiment, the processor 54 may be configured to intercept the aircraft control signals, separate the thrust and stabilizing commands from the control signals and direct the thrust commands to the IC motors to control the rotors 44, 46 to provide the required thrust, and the direct the stabilizing commands to the electric motors operatively connected to the rotors 34...40 to stabilize the aircraft.

It will be understood by those skilled in the art that the control signals generated by the processor 54 may be configured to control the actuators 58 directly and/or via suitable intermediate electrical actuators. For example, in the case of the IC engines, the control signals may be configured to control a suitable electronically actuable throttle.

In use, referring to Figures 1 to 13, a payload (not shown) of approximately 50kg is generally attached to the fuselage 14 of the aircraft 10 in a manner in which the payload is attached to or adjacent the centre of gravity of the aircraft 10. This may be via a harness attached to the airframe 12, particularly the fuselage 14, an enclosure attached to the fuselage 14, etc.

The aircraft 10 is either autonomously controlled from commands from the processor 54 which is optionally interfaced with a flight controller processor (some embodiments, the processor 54 comprises said flight controller processor) or remotely controls via signals received via a ground controller. Instead, the aircraft 10 is controlled with a combination of commands from the processor 54 and ground controller. The ground controller may be an automated controller or a human controller remotely sending control signals to the aircraft 10 so as to control the same.

In any event, the aircraft 10 is actuable upon receipt of suitable commands contained on suitable command signals to be able to fly vertically, which includes manoeuvres which include taking-off vertically, hovering, and landing vertically with the rotors 44, 46 pivoted about the axes D and E to the lift position, respectively by way of suitable actuators receiving signals from the processor 54 which operate the mounts 48.

When lifting off, the rotors 44, 46, if in the propulsion positions as illustrated in Figures 8 to 12, are pivoted in a direction of arrows G and F, in other words an anti-clockwise direction about axes D and E centred on the hinges H of the mounts 48, to the lift positions illustrated in Figures 1 to 7. The rotors 44, 46 rotate simultaneously in the anti-clockwise direction such that the axes K and G move approximately 90 degrees to be substantially perpendicular from their positions when in the propulsion positions, parallel to the axes J and Y. When actuated by the IC engines, the rotors 44, 46 provide a majority, if not all, the thrust to lift the aircraft 10 off the ground to a desired elevation above the ground in vertical flight. When the rotors 44, 46 are actuated, the electric rotors 34...40 are also actuated, typically at the same time as the rotors 44, 46, to provide stability to the aircraft 10 during said take-off so as to balance and counter the raw thrust of the rotors 44, 46 and/or weight of the payload. In particular, to counter any mismatch in raw thrust of the rotors 44, 46 and/or moment caused by the payload weight distribution not being symmetric about the centre of gravity of the aircraft 10.

Once the desired elevation has been reached, the rotors 44, 46 are pivoted in a vectored fashion via the vectoring control mounts 48 to the propulsion position in which they provide forward thrust to propel the aircraft 10 forward towards its destination thereby achieving horizontal flight. The rotors 44, 46 may be pivoted substantially simultaneously between lift and propulsion positions. This may be during transitioning between vertical and horizontal flight, and vice versa. In this regard, the rotor 46 is pivoted about axis D in the direction of arrow M (see Figure 10) substantially simultaneously as the rotor 46 is pivoted about axis E in the direction of arrow L (see Figure 10) to the propulsion position as illustrated in Figures 8 to 12 where the rotors 44, 46 are parallel to each other in the propulsion position as illustrated in Figures 8 to 12. With the axes K and G of the rotors 44, 46 being aligned with the axis A. In horizontal flight, the array 32 of electric rotors 34...40, particularly when the aircraft 10 is above the stall speed of the wing 16, are locked against rotation and are thus not in use or not actuated.

On reaching its destination, as determined by a suitable GPS unit and/or the ground controller, the rotors 44, 46 are again pivoted via the mounts 48 to the lift position and descends in a controlled fashion via the rotors 44, 46 providing primary thrust and the rotors 34...40 providing stability, to a predetermined height in which it is controlled to hover, for example, to deploy the payload. It will be understood that in pivoting between propulsion and lift positions, the rear rotor 46 pivots between a void between the empennage 18 and the tail end portion 14.2 of the fuselage 14. To this end, the booms 20, 22 may have a length to space the empennage 18 sufficiently from the fuselage 14 to facilitate displacement of the rear rotor 46.

After deployment of the payload, the aircraft 10 is then controlled to ascend to a cruising altitude wherein the rotors 44, 46 are displaced to the propulsion position in which the aircraft 10 travels to its original and/or next destination.

Once its mission is completed and the aircraft 10 is at its home location and is landing, the rotors 44, 46 are pivoted to the lift position and controlled with the rotors 34...40 providing stability as the aircraft 10 returns to the ground.

Reference will now be made to the block flow diagrams in which example methods in accordance with an example embodiment of the invention are illustrated. The methods described herein may be carried out by the aircraft 10 and/or control system 50 as described herein will be described as such in order to exemplify the operation thereof. However, nothing precludes the use of the methods described herein with other aircrafts and/or control systems not described herein.

Referring to Figure 15 of the drawings where a high-level block flow diagram of a method for controlling an aircraft 10 is generally indicated by reference numeral 60.

The method 60 may either be in response to receiving suitable control signals from a ground controller and/or from the processor 54 in response to undertaking particular manoeuvres selected from a group comprising vertical flight (vertical take-off, vertical landing, and hovering) and horizontal flight.

Depending on the required manoeuvre, the method 60 comprises controlling, at block 62, the front and rear rotors 44, 46 to be displaceable between the propulsion positions for horizontal flight and lift positions for vertical flight substantially in a manner described herein.

The method 60 further comprises controlling, at block 64, the front and rear rotors 44, 46 to provide a majority of vertical lift to the aircraft 10 during vertical flight with the front and rear rotors in the lift position. Though not shown, the method 60 also comprises controlling the rotors 34...40 to provide stability control and/or lift during vertical flight. It will be understood that the lift of the rotors 34...40, in other words the lift provided by the rotors 34...40 to the aircraft 10, may be a fraction of the lift provided by the rotors 44, 46.

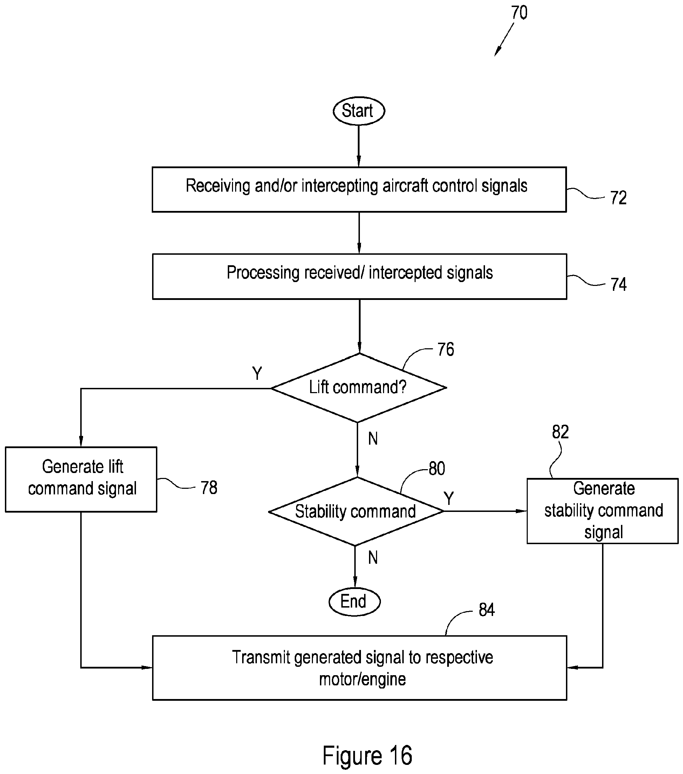

Referring to Figure 16 of the drawings where another flow diagram of a method is generally indicated by reference numeral 70. The method 70 may be carried out by the processor 54 as described herein.

The method 70 may comprise receiving and/or intercepting, at block 72, aircraft control signals comprising lift and/or stability commands to control the lift and/or stability to or of the aircraft 10 during vertical flight. As mentioned, these signals may be from a conventional flight controller configured to provide flight control for certain aerial manoeuvres such as hovering. Signals from conventional flight controllers assume that all the motors provided in an aircraft are matched and thus the control signals contain both thrust and stabilizing commands.

The method 70 comprises processing the received/intercepted aircraft control signals, at block 74, to determine and separate those commands contained in the aircraft control signals which are lift commands, at block 76, and those which are stability commands, at block 80.

The method 70 then comprises generating, at block 78, a suitable lift command signals to control the one or more IC rotors to provide thrust to the aircraft during vertical flight. The method 70 advantageously comprises the step translating the lift commands to a format to control the IC engines associated with the rotors 44, 46. This is because the aircraft control signals received assumes that the rotors 44, 46 are electric. The lift command signals may thus be configured to control suitable throttle bodies associated with the IC engines to achieve the thrust required.

The method 70 comprises generating, at block 82, suitable stability command signals containing the separated stability commands to control the electric motors associated with the rotors 34...40 to provide stability to the aircraft 10 during vertical flight.

The method 70 then comprises, at block 84, transmitting the generated signals to the respective engine/motor, or to the associated control circuitry and/or devices.

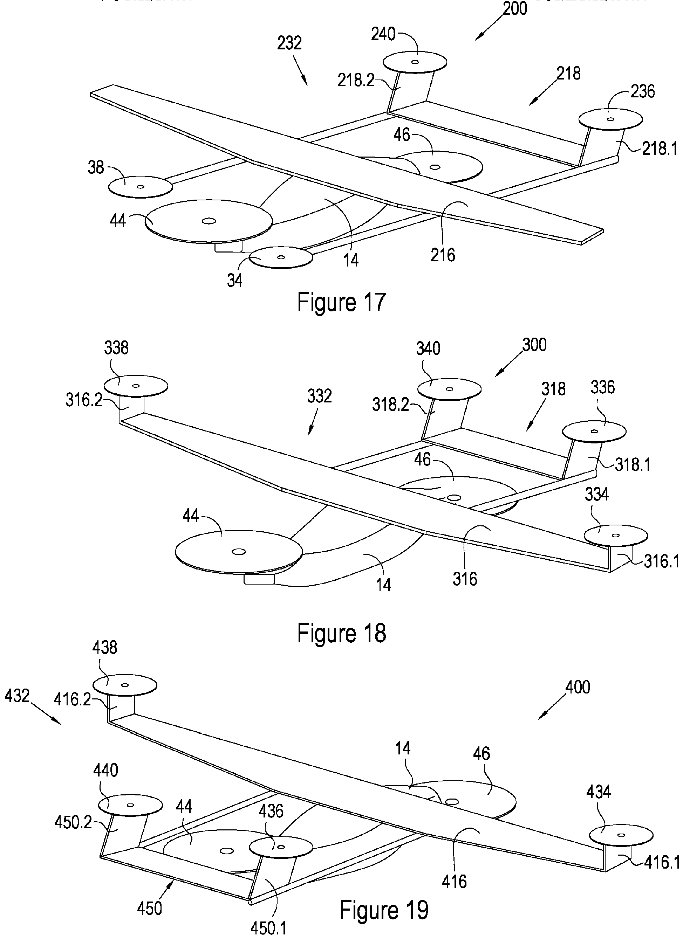

Referring to Figures 17 to 19 of the drawings, alternate configurations of an aircraft in accordance with an example embodiment of the invention is generally indicated by reference numerals 200, 300, and 400, respectively.

The aircraft 200, 300, 400 is substantially similar to the aircraft 10 as described herein and thus the same reference numerals used in the description of the aircraft 10 will be used to denote like parts. Similarly, the explanations provided above, including the description of use, with reference to the aircraft 10 may apply *mutatis mutandis* to the aircraft 200, 300, 400 described herein, unless otherwise specified or understood by those skilled in the art.

Turning to Figures 17 and 18, the aircraft 200, 300 differs from the aircraft 10 in that the array of electric rotors 232, 332 is differently positioned.

In Figure 17, the electric rotors 34 and 38 are provided on booms similar to the booms 20, 22 described above whereas the remaining electric rotors 236 and 240 are provided on fins 218.1, 218.2 adjacent the empennage 218 of the aircraft 200.

In Figure 18, the electric rotors 334 and 338 are provided on winglets 316.1, 316.2 of the wing 316 of the aircraft 300, whereas the electric rotors 336 and 340 are provided on fins 318.1, 318.2 adjacent the empennage 318 of the aircraft 300.

In Figure 19, the aircraft 400 differs from the aircraft 10, 200, 300 in that it does not comprise an empennage but comprises a canard 450 and is of a typically canard construction. Here, the electric rotors 434 and 438 are provided on winglets 416.1, 416.2 of the wing 416 of the aircraft 400, whereas the electric rotors 436 and 440 are provided on fins 318.1, 318.2 adjacent the canard 450 of the aircraft 400. In operation, it will be understood that the front rotor 44 is provided between the fuselage 14 and the canard 40 and is displaceable therebetween in a zone between the canard 450 and the fuselage 14.

From the foregoing, it will be appreciated that the array of electric rotors 32, 232, 332, 432 may be arranged in different configurations on the airframe to provide the desired stability described herein during vertical flight, particularly hovering. Moreover, the further the electric rotors are from the centre of gravity, the smaller it can be to achieve the desired stability of the aircraft during vertical flight as described herein.

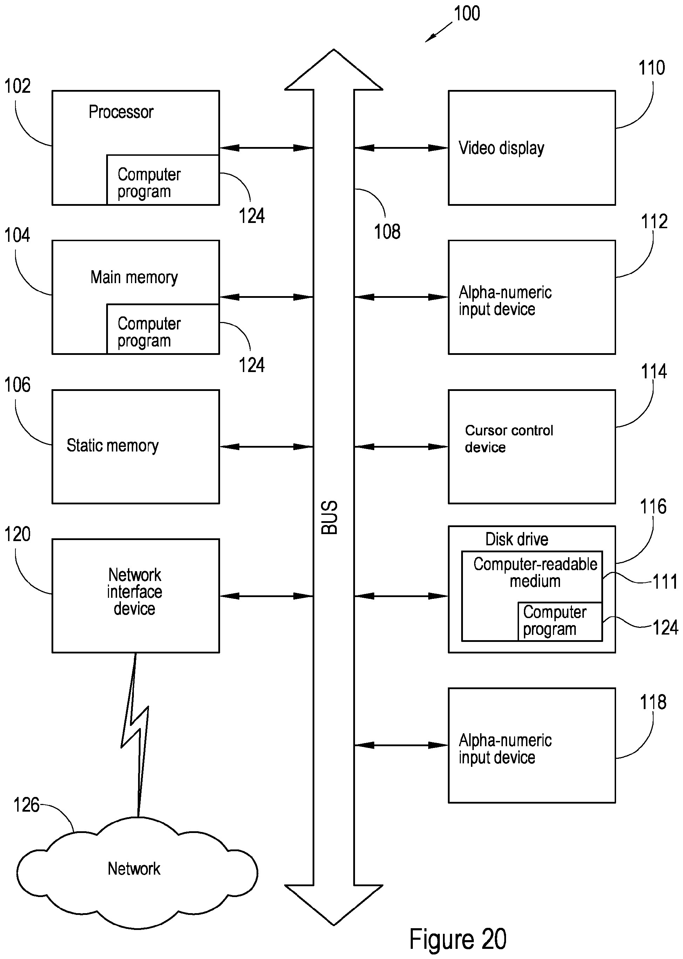

Referring now to Figure 20 of the drawings which shows a diagrammatic representation of the machine in the example of a computer system 100 within which a set of instructions, for causing the machine to perform any one or more of the methodologies discussed herein, may be executed. In other example embodiments, the machine operates as a standalone device or may be connected (e.g., networked) to other machines. In a networked example embodiment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated for convenience, the term "machine" shall also be taken to include any collection of machines, including virtual machines, that individually or jointly execute a set (or multiple sets) of instructions to perform any one or more of the methodologies discussed herein.

In any event, the example computer system 100 includes a processor 102 (e.g., a central processing unit (CPU), a graphics processing unit (GPU) or both), a main memory 104 and a static memory 106, which communicate with each other via a bus 108. The computer system 100 may further include a video display unit 110 (e.g., a liquid crystal display (LCD) or a cathode ray tube (CRT)). The computer system 100 also includes an alphanumeric input device 112 (e.g., a keyboard), a user interface (UI) navigation device 114 (e.g., a mouse, or touchpad), a disk drive unit 116, a signal generation device 118 (e.g., a speaker) and a network interface device 120.

The disk drive unit 116 includes a non-transitory machine-readable medium 122 storing one or more sets of instructions and data structures (e.g., software 124) embodying or utilised by any one or more of the methodologies or functions described herein. The software 124 may also reside, completely or at least partially, within the main memory 104 and/or within the processor 102 during execution thereof by the computer system 100, the main memory 104 and the processor 102 also constituting machine-readable media.

The software 124 may further be transmitted or received over a network 126 via the network interface device 120 utilising any one of a number of well-known transfer protocols (e.g., HTTP).

Although the machine-readable medium 122 is shown in an example embodiment to be a single medium, the term "machine-readable medium" may refer to a single medium or multiple medium (e.g., a centralized or distributed memory store, and/or associated caches and servers) that store the one or more sets of instructions. The term "machine-readable medium" may also be taken to include any medium that is capable of storing, encoding, or carrying a set of instructions for execution by the machine and that cause the machine to perform any one or more of the methodologies of the present invention, or that is capable of storing, encoding, or carrying data structures utilised by or associated with such a set of instructions. The term "machine-readable medium" may accordingly be taken to include, but not be limited to, solid-state memories, optical and magnetic media, and carrier wave signals.

The present invention disclosed herein conveniently provides a multirotor aircraft with a fixed wing which enables vertical take-off and landing (VTOL) capability of multirotor aircrafts combined with the endurance and speed of a fixed wing aircraft but has a much larger payload capacity than conventional hybrid VTOL aircrafts of the type contemplated herein.

In particular, the invention as described herein uses all rotors (IC rotors and electric rotors) in the hover manoeuvre when the highest thrust is needed but obtains most of the thrust from the fuselage mounted petrol rotors tipped to vertical and achieving hover stability and balance by means of the four outer vertical electric rotors. This means that the electric rotors can be very small and very light and that their lithium-ion batteries can be sized just adequate for a short duration of hover. In this regard, when the aircraft transitions to forward flight from vertical flight as a normal fixed wing aircraft, it is carrying very little weight penalty with it in the form of hover rotors. This is a key difference between the aircraft disclosed herein and other prior art designs, wherein this different will allow for a higher payload and longer endurance.

Once the aircraft disclosed herein has transitioned to forward flight it is supported solely by lift generated by its high aspect ratio wing and its energy requirements are approximately 1/6 of that required for hover. This energy is obtained from one or both of the fuselage petrol rotors set horizontally and at a modest and economical cruise power setting to maximise range. The key to attaining long range missions is to ensure that payload is maximised by carrying as little as possible "dead weight" in the form of VTOL lift rotors. The present disclosure attains this by sizing the electric rotors and their battery packs as small as possible. As mentioned above, it will be understood that reference to the electric rotors may be understood to be the electric rotors coupled to the electric motor/s. Similarly the IC rotors may be understood to be the IC rotors coupled to the IC engine/s. In this regard, it will be understood by those skilled in the art that the use of the words "rotor" and "motor" may be used interchangeably herein unless otherwise specified and/or it is evident to those skilled in art in light of the context of the specification.

Finally, Lithium-Ion battery packs and brushless motors have a very big advantage and a very big disadvantage when compared to petrol motors namely, they have a very high instantaneous energy density W/kg but a very low total energy density kW.hrs/kg. The invention disclosed herein leverages this critical advantage and negates the disadvantage by the relative sizing of the electric and petrol motors and their method of use, wherein the electric motors provide primarily stability during vertical flight and the front and rear rotors provide primary thrust for vertical and horizontal flight.

In summary, the primary advantage of the invention as disclosed herein is the larger payload possible versus others and is achieved by the mix of electric and IC powered rotors as well as their relative sizing and the fact that all rotors provide upward thrust during hover which is the phase of flight requiring the highest power (thrust).

Dead weight is minimized in hover (there is none as all rotors are providing thrust). Dead weight is minimized in forward flight as electric hardware is small).

In horizontal or forward flight, the power (thrust) requirements are between 10-25% of that required during hover. This is due to the higher efficiency of a fixed wing aircraft over a rotor craft in forward flight which is common knowledge. During this phase of flight forward thrust is provided by one or both of the front and rear rotors. The electric rotors are not used during this phase of flight and are hence dead weight. Due however to their (and their battery's small size) they have little negative effect on payload.

In forward flight the aircraft is flown as a conventional fixed wing aircraft.

## Claims

1. A vertical take-off and landing (VTOL) aircraft (10, 200, 300, 400), wherein the aircraft (10, 200, 300, 400) comprises:
an airframe (12) having at least one or at least a pair of wing/s (16) extending along a transverse axis, the wing/s (16) being operatively attached to a fuselage (14) having leading and trailing ends (14.1, 14.2) extending between a longitudinal axis (A) of the aircraft (10, 200, 300, 400), and a suitable empennage (18, 218, 318) located adjacent the trailing end (14.2) of the fuselage (14) or a suitable canard (450) located adjacent the leading end (14.1) of the fuselage (14);
an array (32, 232, 332, 432) of electric rotors (34, 36, 38, 40, 236, 240, 334, 336, 338, 340, 434, 436, 438, 440) mounted to the airframe (12) operatively to provide stability and/or vertical lift to the aircraft (10, 200, 300, 400), wherein the electric rotors (34, 36, 38, 40, 236, 240, 334, 336, 338, 340, 434, 436, 438, 440) are fixedly mounted to the airframe (12) and are driven by one or more suitable electric motor/s;
a front rotor (44) pivotably mounted to the leading end (14.1) of the fuselage (14), wherein the front rotor (44) is displaceable about an axis parallel to the transverse axis between a lift position in which the front rotor (44) is oriented to provide vertical lift to the aircraft (10, 200, 300, 400) for vertical flight, and a propulsion position in which the front rotor (44) is oriented to provide forward thrust to the aircraft (10, 200, 300, 400) for horizontal flight; and
a rear rotor (46) pivotably mounted to the trailing end (14.2) of the fuselage (14), wherein the rear rotor (46) is displaceable about an axis parallel to the transverse axis between a lift position in which the rear rotor (46) is oriented to provide vertical lift to the aircraft (10, 200, 300, 400) for vertical flight, and a propulsion position in which the rear rotor (46) is oriented to provide forward thrust to the aircraft (10, 200, 300, 400) for horizontal flight, wherein one or both of the front and rear rotors (44, 46) are driven by one or more suitable internal combustion engine/s, and wherein the front and rear rotors (44, 46) provide a majority, or all, of the vertical lift to the aircraft (10, 200, 300, 400) during vertical flight with the front and rear rotors (44, 46) in the lift position.

2. An aircraft (10, 200, 300, 400) as claimed in claim 1, wherein the front rotor (44) is pivotably mounted between the fuselage (14) and the canard (450); or wherein the rear rotor (46) is pivotably mounted between the fuselage (14) and the empennage (18, 218, 318).

3. An aircraft (10, 200, 300, 400) as claimed in any one of the preceding claims, wherein the front and rear rotors (44, 46) are driven by internal combustion engine/s and provide primary vertical lift to the aircraft (10, 200, 300, 400), and wherein the electric rotors (34, 36, 38, 40, 236, 240, 334, 336, 338, 340, 434, 436, 438, 440) provide primary stability to the aircraft (10, 200, 300, 400), at least during vertical flight.

4. An aircraft (10, 200, 300, 400) as claimed in any one of the preceding claims, wherein the electric rotors (34, 36, 38, 40, 236, 240, 334, 336, 338, 340, 434, 436, 438, 440) are powered by an electrical power source which is configured to power the electric rotors (34, 36, 38, 40, 236, 240, 334, 336, 338, 340, 434, 436, 438, 440) for a duration of time which is less than a duration of time which the front and rear rotors (44, 46) are capable of being powered by the one or more internal combustion engine/s.

5. An aircraft (10, 200, 300, 400) as claimed in any one of the preceding claims, wherein each of the front and rear rotors (44, 46) are at least twice as powerful as one of the electric rotors (34, 36, 38, 40, 236, 240, 334, 336, 338, 340, 434, 436, 438, 440) and are driven by front and rear internal combustion engines.

6. An aircraft (10, 200, 300, 400) as claimed in any one of the preceding claims, wherein a size or power of the electric motors is inversely proportional to the distance from a centre of gravity of the aircraft (10, 200, 300, 400).

7. An aircraft (10, 200, 300, 400) as claimed in any one of the preceding claims, wherein the array (32, 232, 332, 432) of electric rotors (34, 36, 38, 40, 236, 240, 334, 336, 338, 340, 434, 436, 438, 440) is mounted to the airframe (12) in a spaced apart configuration, wherein the electric rotors (34, 36, 38, 40, 236, 240, 334, 336, 338, 340, 434, 436, 438, 440) are operatively coplanar and are located in a first plane, and wherein the front and rear rotors (44, 46) are located in second and third planes which are substantially co-planar with and/or are parallel to the first plane when the front and rear rotors (44, 46) are operated to the lift positions, in use.

8. An aircraft (10, 200, 300, 400) as claimed in any one of the preceding claims, wherein the front and rear rotors (44, 46) are mounted to the fuselage (14) via vectoring control mounts which facilitate vectoring control of the front and rear rotors (44, 46).

9. An aircraft (10, 200, 300, 400) as claimed in any one of the preceding claims, wherein the front and rear rotors (44, 46) are slightly offset from a vertical axis in an anticlockwise direction about the longitudinal axis (A) as viewed from the front of the aircraft (10, 200, 300, 400).

10. A method (60, 70) of controlling a vertical take-off and landing (VTOL) aircraft (10, 200, 300, 400) comprising an airframe (12) having at least one or at least a pair of wing/s (16) extending along a transverse axis, the wing/s (16) being operatively attached to a fuselage (14) having leading and trailing ends (14.1, 14.2) extending between a longitudinal axis (A) of the aircraft (10, 200, 300, 400), and a suitable empennage (18, 218, 318) located adjacent the trailing end (14.2) of the fuselage (14) or a suitable canard (450) located adjacent the leading end (14.1) of the fuselage (14); an array (32, 232, 332, 432) of electric rotors (34, 36, 38, 40, 236, 240, 334, 336, 338, 340, 434, 436, 438, 440) mounted to the airframe (12) operatively to provide vertical stability and/or lift to the aircraft (10, 200, 300, 400), wherein the electric rotors (34, 36, 38, 40, 236, 240, 334, 336, 338, 340, 434, 436, 438, 440) are fixedly mounted to the airframe (12) and are driven by one or more suitable electric motor/s; a front rotor (44) pivotably mounted to the leading end (14.1) of the fuselage (14), wherein the front rotor (44) is displaceable about an axis parallel to the transverse axis between a lift position in which the front rotor (44) is oriented to provide vertical lift to the aircraft (10, 200, 300, 400) for vertical flight, and a propulsion position in which the front rotor (44) is oriented to provide forward thrust to the aircraft (10, 200, 300, 400) for horizontal flight; and a rear rotor (46) pivotably mounted to the trailing end (14.2) of the fuselage (14), wherein the rear rotor (46) is displaceable about an axis parallel to the transverse axis between a lift position in which the rear rotor (46) is oriented to provide vertical lift to the aircraft (10, 200, 300, 400) for vertical flight, and a propulsion position in which the rear rotor (46) is oriented to provide forward thrust to the aircraft (10, 200, 300, 400) for horizontal flight, wherein one or both of the front and rear rotors (44, 46) are driven by one or more suitable internal combustion engine/s, wherein the method comprises:
controlling (62) the front and rear rotors (44, 46) to be displaceable between the propulsion positions for horizontal flight and lift positions for vertical flight; and
controlling (64) the front and rear rotors (44, 46) to provide a majority, or all, of the vertical lift to the aircraft (10, 200, 300, 400) during vertical flight with the front and rear rotors (44, 46) in the lift position.

11. A method (60, 70) as claimed in claim 10, wherein the method (60, 70) comprises the steps of:
receiving and/or intercepting aircraft control signals (72)comprising lift and/or stability commands to control the lift and/or stability of the aircraft (10, 200, 300, 400) during vertical flight;
controlling the front and rear rotors (44, 46), by using the lift commands, to provide a majority, or all, of the vertical lift to the aircraft (10, 200, 300, 400) during vertical flight, and
controlling the array (32, 232, 332, 432) of electric rotors (34, 36, 38, 40, 236, 240, 334, 336, 338, 340, 434, 436, 438, 440) by using the stability commands to provide stability to the aircraft (10, 200, 300, 400) during vertical flight.

12. A method (60, 70) as claimed in either claim 10 or 11, wherein the array (32, 232, 332, 432) of electric rotors (34, 36, 38, 40, 236, 240, 334, 336, 338, 340, 434, 436, 438, 440) is mounted to the airframe (12) in a spaced apart configuration, wherein the electric rotors (34, 36, 38, 40, 236, 240, 334, 336, 338, 340, 434, 436, 438, 440) are operatively coplanar and are located in a first plane, wherein the method comprises displacing the front and rear rotors (44, 46) to the lift positions for vertical flight, wherein in the lift positions the front and rear rotors (44, 46) are located in second and third planes respectively which are substantially co-planar with and/or are parallel to the first plane when the front and rear rotors (44, 46) are operated to the lift positions.

13. A method (60, 70) as claimed in claim 11, wherein the method comprises controlling the front and rear rotors (44, 46) to be pivotably displaceable between the lift and propulsion positions in response to the determined lift commands substantially simultaneously.

14. A control system (50) for controlling a vertical take-off and landing (VTOL) aircraft (10, 200, 300, 400) comprising an airframe (12) having at least one or at least a pair of wing/s (16) extending along a transverse axis, the wing/s (16) being operatively attached to a fuselage (14) having leading and trailing ends (14.1, 14.2) extending between a longitudinal axis (A) of the aircraft (10, 200, 300, 400), and an empennage (18, 218, 318) located adjacent the trailing end (14.2) of the fuselage (14) or a canard (450) located adjacent the leading end (14.1) of the fuselage (14); an array (32, 232, 332, 432) of electric rotors (34, 36, 38, 40, 236, 240, 334, 336, 338, 340, 434, 436, 438, 440) mounted to the airframe (12) operatively to provide vertical stability and/or lift to the aircraft (10, 200, 300, 400), wherein the electric rotors (34, 36, 38, 40, 236, 240, 334, 336, 338, 340, 434, 436, 438, 440) are fixedly mounted to the airframe (12) and are driven by one or more suitable electric motor/s; a front rotor (44) pivotably mounted to the leading end (14.1) of the fuselage (14), wherein the front rotor (44) is displaceable about an axis parallel to the transverse axis between a lift position in which the front rotor (44) is oriented to provide vertical lift to the aircraft (10, 200, 300, 400) for vertical flight, and a propulsion position in which the front rotor (44) is oriented to provide forward thrust to the aircraft (10, 200, 300, 400) for horizontal flight; and a rear rotor (46) pivotably mounted to the trailing end (14.2) of the fuselage (14), wherein the rear rotor (46) is displaceable about an axis parallel to the transverse axis between a lift position in which the rear rotor (46) is oriented to provide vertical lift to the aircraft (10, 200, 300, 400) for vertical flight, and a propulsion position in which the rear rotor (46) is oriented to provide forward thrust to the aircraft (10, 200, 300, 400) for horizontal flight, wherein one or both of the front and rear rotors (44, 46) are driven by one or more suitable internal combustion engine/s, wherein the control system comprises:
a memory device (52);
a processor (54) coupled to the memory device, the processor (54) being configured to:
receive and/or intercept aircraft control signals (72) comprising lift and/or stability commands to control the lift and/or stability of the aircraft (10, 200, 300, 400) during vertical flight;
control (62) the front and rear rotors (44, 46) to be displaceable between the propulsion positions for horizontal flight and lift positions for vertical flight;
control (64) the front and rear rotors (44, 46) by using lift commands to provide a majority, or all, of the vertical lift to the aircraft (10, 200, 300, 400) during vertical flight with the front and rear rotors (44, 46) in the lift position; and
control the array (32, 232, 332, 432) of electric rotors (34, 36, 38, 40, 236, 240, 334, 336, 338, 340, 434, 436, 438, 440) by using the stability commands to provide stability to the aircraft (10, 200, 300, 400) during vertical flight.

15. A non-transitory computer readable storage medium storing non-transitory computer executable instructions which when executed by a suitable processor remotely in communication with or on-board a vertical take-off and landing (VTOL) aircraft (10, 200, 300, 400) comprising an airframe (12) having at least one or at least a pair of wing/s (16) extending along a transverse axis, the wing/s (16) being operatively attached to a fuselage (14) having leading and trailing ends (14.1, 14.2) extending between a longitudinal axis (A) of the aircraft (10, 200, 300, 400), and an empennage (18, 218, 318) located adjacent the trailing end (14.2) of the fuselage (14) or a suitable canard (450) located adjacent the leading end (14.1) of the fuselage (14); an array (32, 232, 332, 432) of electric rotors (34, 36, 38, 40, 236, 240, 334, 336, 338, 340, 434, 436, 438, 440) mounted to the airframe (12) operatively to provide vertical lift and/or stability to the aircraft (10, 200, 300, 400), wherein the electric rotors (34, 36, 38, 40, 236, 240, 334, 336, 338, 340, 434, 436, 438, 440) are fixedly mounted to the airframe (12) and are driven by one or more suitable electric motors; a front rotor (44) pivotably mounted to the leading end (14.1) of the fuselage (14), wherein the front rotor (44) is displaceable about an axis parallel to the transverse axis between a lift position in which the front rotor (44) is oriented to provide vertical lift to the aircraft (10, 200, 300, 400) for vertical flight, and a propulsion position in which the front rotor (44) is oriented to provide forward thrust to the aircraft (10, 200, 300, 400) for horizontal flight; and a rear rotor (46) pivotably mounted to the trailing end (14.2) of the fuselage (14), wherein the front rotor (44) is displaceable about an axis parallel to the transverse axis between a lift position in which the rear rotor (46) is oriented to provide vertical lift to the aircraft (10, 200, 300, 400) for vertical flight, and a propulsion position in which the rear rotor(46) is oriented to provide forward thrust to the aircraft (10, 200, 300, 400) for horizontal flight, wherein one or both of the front and rear rotors (44, 46) are driven by one or more suitable internal combustion engine/s, causes the at least one processor to perform the method steps as claimed in any one of claims 10 to 13.

## Patentansprüche

1. Senkrecht startendes und landendes (VTOL-) Flugzeug (10, 200, 300, 400), wobei das Flugzeug (10, 200, 300, 400) umfasst:
eine Flugzeugzelle (12) mit mindestens einer oder mindestens einem Paar Tragfläche(n) (16), die sich entlang einer Querachse erstreckt/en, wobei die Tragfläche(n) (16) funktionell an einem Rumpf (14) angebracht ist bzw. sind, der ein vorderes und ein hinteres Ende (14.1, 14.2) aufweist, die sich über einer Längsachse (A) des Flugzeugs (10, 200, 300, 400) erstrecken, und einem geeigneten Leitwerk (18, 218, 318), das sich neben dem hinteren Ende (14.2) des Rumpfs (14) befindet, oder einem geeigneten Canard (450), der sich neben dem vorderen Ende (14.1) des Rumpfs (14) befindet,
eine Anordnung (32, 232, 332, 432) von elektrischen Rotoren (34, 36, 38, 40, 236, 240, 334, 336, 338, 340, 434, 436, 438, 440), die an der Flugzeugzelle (12) angebracht sind, um dem Flugzeug (10, 200, 300, 400) eine vertikale Stabilität und/oder einen vertikalen Auftrieb zu verleihen, wobei die elektrischen Rotoren (34, 36, 38, 40, 236, 240, 334, 336, 338, 340, 434, 436, 438, 440) fest an der Flugzeugzelle (12) angebracht sind und von einem oder mehreren geeigneten Elektromotoren angetrieben werden;
einen Frontrotor (44), der schwenkbar an dem vorderen Ende (14.1) des Rumpfs (14) angebracht ist, wobei der Frontrotor (44) um eine Achse parallel zu der Querachse zwischen einer Auftriebsposition, in der der Frontrotor (44) ausgerichtet ist, um dem Flugzeug (10, 200, 300, 400) für einen Vertikalflug einen vertikalen Auftrieb zu verleihen, und einer Antriebsposition, in der der Frontrotor (44) ausgerichtet ist, um dem Flugzeug (10, 200, 300, 400) für einen Horizontalflug einen Vorwärtsschub zu verleihen, versetzbar ist; und
einen Heckrotor (46), der schwenkbar an dem hinteren Ende (14.2) des Rumpfs (14) angebracht ist, wobei der Heckrotor (46) um eine Achse parallel zu der Querachse zwischen einer Auftriebsposition, in der der Heckrotor (46) ausgerichtet ist, um dem Flugzeug (10, 200, 300, 400) für einen Vertikalflug einen vertikalen Auftrieb zu verleihen, und einer Antriebsposition, in der der Heckrotor (46) ausgerichtet ist, um dem Flugzeug (10, 200, 300, 400) für einen Horizontalflug einen Vorwärtsschub zu verleihen, versetzbar ist, wobei einer oder beide von dem Front- und dem Heckrotor (44, 46) durch einen oder mehrere geeignete(n) Verbrennungsmotor(en) angetrieben wird bzw. werden, und wobei der Front- und der Heckrotor (44, 46) während des Vertikalflugs einen Großteil oder den gesamten vertikalen Auftrieb für das Flugzeug (10, 200, 300, 400) bereitstellen, wobei sich der Front- und der Heckrotor (44, 46) in der Auftriebsposition befinden.

2. Flugzeug (10, 200, 300, 400) nach Anspruch 1, wobei der Frontrotor (44) schwenkbar zwischen dem Rumpf (14) und dem Canard (450) angebracht ist; oder wobei der Heckrotor (46) schwenkbar zwischen dem Rumpf (14) und dem Leitwerk (18, 218, 318) angebracht ist.

3. Flugzeug (10, 200, 300, 400) nach einem der vorhergehenden Ansprüche, wobei der Front- und der Heckrotor (44, 46) von einem/mehreren Verbrennungsmotor(en) angetrieben werden und dem Flugzeug (10, 200, 300, 400) primär einen vertikalen Auftrieb verleihen, und wobei die elektrischen Rotoren (34, 36, 38, 40, 236, 240, 334, 336, 338, 340, 434, 436, 438, 440) dem Flugzeug (10, 200, 300, 400) zumindest während eines Vertikalflugs primär Stabilität verleihen.

4. Flugzeug (10, 200, 300, 400) nach einem der vorhergehenden Ansprüche, wobei die elektrischen Rotoren (34, 36, 38, 40, 236, 240, 334, 336, 338, 340, 434, 436, 438, 440) von einer elektrischen Stromquelle angetrieben werden, die ausgestaltet ist, um die elektrischen Rotoren (34, 36, 38, 40, 236, 240, 334, 336, 338, 340, 434, 436, 438, 440) für eine Zeitdauer anzutreiben, die kürzer ist als eine Zeitdauer, in der der Front- und der Heckrotor (44, 46) in der Lage sind, von dem einen oder den mehreren Verbrennungsmotoren angetrieben zu werden.

5. Flugzeug (10, 200, 300, 400) nach einem der vorhergehenden Ansprüche, wobei jeder von dem Front- und dem Heckrotor (44, 46) mindestens doppelt so leistungsstark ist wie einer der elektrischen Rotoren (34, 36, 38, 40, 236, 240, 334, 336, 338, 340, 434, 436, 438, 440) und von einem vorderen und einem hinteren Verbrennungsmotor angetrieben werden.

6. Flugzeug (10, 200, 300, 400) nach einem der vorhergehenden Ansprüche, wobei eine Größe oder eine Leistung der Elektromotoren umgekehrt proportional zu einer Entfernung von einem Schwerpunkt des Flugzeugs (10, 200, 300, 400) ist.

7. Flugzeug (10, 200, 300, 400) nach einem der vorhergehenden Ansprüche, wobei die Anordnung (32, 232, 332, 432) der elektrischen Rotoren (34, 36, 38, 40, 236, 240, 334, 336, 338, 340, 434, 436, 438, 440) in einer beabstandeten Konfiguration an der Flugzeugzelle (12) angebracht sind, wobei die elektrischen Rotoren (34, 36, 38, 40, 236, 240, 334, 336, 338, 340, 434, 436, 438, 440) funktionsfähig koplanar sind und sich in einer ersten Ebene befinden, und wobei sich der Front- und der Heckrotor (44, 46) in einer zweiten bzw. einer dritten Ebene befinden, die im Wesentlichen koplanar mit und/oder parallel zu der ersten Ebene sind, wenn der Front- und der Heckrotor (44, 46) im Betrieb in der Auftriebsposition betrieben werden.

8. Flugzeug (10, 200, 300, 400) nach einem der vorherstehenden Ansprüche, wobei der Front- und der Heckrotor (44, 46) über Vektorsteuerungshalterungen an dem Rumpf (14) angebracht sind, die eine Vektorsteuerung des Front- und des Heckrotors (44, 46) ermöglichen.

9. Flugzeug (10, 200, 300, 400) nach einem der vorhergehenden Ansprüche, wobei der Front- und der Heckrotor (44, 46) von einer vertikalen Achse in einer Richtung entgegen dem Uhrzeigersinn um die Längsachse (A) leicht versetzt sind, von der Vorderseite des Flugzeugs (10, 200, 300, 400) aus gesehen.

10. Verfahren (60, 70) zum Steuern eines senkrecht startenden und landenden (VTOL-) Flugzeugs (10, 200, 300, 400), das umfasst eine Flugzeugzelle (12) mit mindestens einer oder mindestens einem Paar Tragfläche(n) (16), die sich entlang einer Querachse erstreckt/en, wobei die Tragfläche(n) (16) funktionsfähig an einem Rumpf (14) angebracht ist/sind, der ein vorderes und ein hinteres Ende (14.1, 14.2) aufweist, die sich über einer Längsachse (A) des Flugzeugs (10, 200, 300, 400) erstrecken, und einem geeigneten Leitwerk (18, 218, 318), das sich neben dem hinteren Ende (14.2) des Rumpfs (14) befindet, oder einem geeigneten Canard (450), der sich neben dem vorderen Ende (14.1) des Rumpfs (14) befindet;
eine Anordnung (32, 232, 332, 432) von elektrischen Rotoren (34, 36, 38, 40, 236, 240, 334, 336, 338, 340, 434, 436, 438, 440), die an der Flugzeugzelle (12) angebracht sind, um dem Flugzeug (10, 200, 300, 400) eine vertikale Stabilität und/oder einen vertikalen Auftrieb zu verleihen, wobei die elektrischen Rotoren (34, 36, 38, 40, 236, 240, 334, 336, 338, 340, 434, 436, 438, 440) fest an der Flugzeugzelle (12) angebracht sind und von einem oder mehreren geeigneten Elektromotoren angetrieben werden;
einen Frontrotor (44), der schwenkbar an dem vorderen Ende (14.1) des Rumpfs (14) angebracht ist, wobei der Frontrotor (44) um eine Achse parallel zu der Querachse zwischen einer Auftriebsposition, in der der Frontrotor (44) ausgerichtet ist, um dem Flugzeug (10, 200, 300, 400) für einen Vertikalflug einen vertikalen Auftrieb zu verleihen, und einer Antriebsposition, in der der Frontrotor (44) ausgerichtet ist, um dem Flugzeug (10, 200, 300, 400) für einen Horizontalflug einen Vorwärtsschub zu verleihen, versetzbar ist; und
einen Heckrotor (46), der schwenkbar an dem hinteren Ende (14.2) des Rumpfs (14) angebracht ist, wobei der Heckrotor (46) um eine Achse parallel zu der Querachse zwischen einer Auftriebsposition, in der der Heckrotor (46) ausgerichtet ist, um dem Flugzeug (10, 200, 300, 400) für einen Vertikalflug einen vertikalen Auftrieb zu verleihen, und einer Antriebsposition, in der der Heckrotor (46) ausgerichtet ist, um dem Flugzeug (10, 200, 300, 400) für einen Horizontalflug einen Vorwärtsschub zu verleihen, versetzbar ist, wobei einer oder beide von dem Front- und dem Heckrotor (44, 46) durch einen oder mehrere geeignete(n) Verbrennungsmotor(en) angetrieben wird bzw. werden, wobei das Verfahren umfasst:
Steuern (62) des Front- und des Heckrotors (44, 46), so dass sie zwischen der Antriebsposition für den Horizontalflug und der Auftriebsposition für den Vertikalflug versetzbar sind; und
Steuern (64) des Front- und des Heckrotors (44, 46), um einen Großteil oder den gesamten vertikalen Auftrieb für das Flugzeug (10, 200, 300, 400) während des Vertikalflugs bereitzustellen, wobei sich der Front- und der Heckrotor (44, 46) in der Auftriebsposition befinden.

11. Verfahren (60, 70) nach Anspruch 10, wobei das Verfahren (60, 70) die folgenden Schritte umfasst:
Empfangen und/oder Abhören von Flugzeugsteuersignalen (72), die Auftriebs- und/oder Stabilitätsbefehle umfassen, um den Auftrieb und/oder die Stabilität des Flugzeugs (10, 200, 300, 400) während des Vertikalflugs zu steuern;
Steuern des Front- und des Heckrotors (44, 46) unter Verwendung der Auftriebsbefehle, um dem Flugzeug (10, 200, 300, 400) während eines Vertikalflugs einen Großteil oder den gesamten Vertikalauftrieb zu verleihen, und
Steuern der Anordnung (32, 232, 332, 432) der elektrischen Rotoren (34, 36, 38, 40, 236, 240, 334, 336, 338, 340, 434, 436, 438, 440) durch Verwendung der Stabilitätsbefehle, um dem Flugzeug (10, 200, 300, 400) während eines Vertikalflugs Stabilität zu verleihen.

12. Verfahren (60, 70) nach Anspruch 10 oder 11, wobei die Anordnung (32, 232, 332, 432) von elektrischen Rotoren (34, 36, 38, 40, 236, 240, 334, 336, 338, 340, 434, 436, 438, 440) in einer beabstandeten Konfiguration an der Flugzeugzelle (12) angebracht ist, wobei die elektrischen Rotoren (34, 36, 38, 40, 23 6, 240, 334, 336, 338, 340, 434, 436, 438, 440) funktionsfähig koplanar sind und sich in einer ersten Ebene befinden, wobei das Verfahren ein Versetzen des Front- und des Heckrotors (44, 46) in die Auftriebsposition für einen Vertikalflug umfasst, wobei sich in der Auftriebsposition der Front- und der Heckrotor (44, 46) in einer zweiten bzw. dritten Ebene befinden, die im Wesentlichen koplanar mit und/oder parallel zu der ersten Ebene sind, wenn der Front- und der Heckrotor (44, 46) in der Auftriebsposition betrieben werden.

13. Verfahren (60, 70) nach Anspruch 11, wobei das Verfahren ein Steuern des Front- und des Heckrotors (44, 46) umfasst, um als Reaktion auf die bestimmten Auftriebsbefehle im Wesentlichen gleichzeitig zwischen der Auftriebs- und der Antriebsposition schwenkbar verstellbar zu sein.

14. Steuerungssystem (50) zum Steuern eines senkrecht startenden und landenden (VTOL-) Flugzeugs (10, 200, 300, 400), das umfasst eine Flugzeugzelle (12) mit mindestens einer oder mindestens einem Paar Tragfläche(n) (16), die sich entlang einer Querachse erstreckt/en, wobei die Tragfläche(n) (16) funktionsfähig an einem Rumpf (14) angebracht ist bzw. sind, der ein vorderes und ein hinteres Ende (14.1, 14.2) aufweist, die sich über einer Längsachse (A) des Flugzeugs (10, 200, 300, 400) erstrecken, und einem Leitwerk (18, 218, 318), das sich neben dem hinteren Ende (14.2) des Rumpfs (14) befindet, oder einem Canard (450), der sich neben dem vorderen Ende (14.1) des Rumpfs (14) befindet; eine Anordnung (32, 232, 332, 432) von elektrischen Rotoren (34, 36, 38, 40, 236, 240, 334, 336, 338, 340, 434, 436, 438, 440), die an der Flugzeugzelle (12) angebracht sind, um dem Flugzeug (10, 200, 300, 400) eine vertikale Stabilität und/oder einen vertikalen Auftrieb zu verleihen, wobei die elektrischen Rotoren (34, 36, 38, 40, 236, 240, 334, 336, 338, 340, 434, 436, 438, 440) fest an der Flugzeugzelle (12) angebracht sind und von einem oder mehreren geeigneten Elektromotoren angetrieben werden; einen Frontrotor (44), der schwenkbar an dem vorderen Ende (14.1) des Rumpfs (14) angebracht ist, wobei der Frontrotor (44) um eine Achse parallel zu der Querachse zwischen einer Auftriebsposition, in der der Frontrotor (44) ausgerichtet ist, um dem Flugzeug (10, 200, 300, 400) für einen Vertikalflug einen vertikalen Auftrieb zu verleihen, und einer Antriebsposition, in der der Frontrotor (44) ausgerichtet ist, um dem Flugzeug (10, 200, 300, 400) für einen Horizontalflug einen Vorwärtsschub zu verleihen, versetzbar ist; und einen Heckrotor (46), der schwenkbar an dem hinteren Ende (14.2) des Rumpfs (14) angebracht ist, wobei der Heckrotor (46) um eine Achse parallel zu der Querachse zwischen einer Auftriebsposition, in der der Heckrotor (46) ausgerichtet ist, um dem Flugzeug (10, 200, 300 , 400) für einen Vertikalflug einen vertikalen Auftrieb zu verleihen, und einer Antriebsposition, in der der Heckrotor (46) ausgerichtet ist, um dem Flugzeug (10, 200, 300, 400) für einen Horizontalflug einen Vorwärtsschub zu verleihen, versetzbar ist, wobei einer oder beide von dem Front- und dem Heckrotor (44, 46) durch einen oder mehrere geeignete(n) Verbrennungsmotoren) angetrieben wird bzw. werden, wobei das Steuerungssystem umfasst:
eine Speichereinrichtung (52);
einen Prozessor (54), der mit der Speichereinrichtung gekoppelt ist, wobei der Prozessor (54) ausgestaltet ist,:
um Flugzeugsteuerungssignale (72) zu empfangen und/oder abzuhören, die Auftriebs- und/oder Stabilitätsbefehle umfassen, um den Auftrieb und/oder die Stabilität des Flugzeugs (10, 200, 300, 400) während des Vertikalflugs zu steuern;
um den Front- und den Heckrotor (44, 46) zu steuern, um zwischen den Antriebspositionen für einen Horizontalflug und den Auftriebspositionen für einen Vertikalflug versetzbar zu sein;
um den Front- und den Heckrotor (44, 46) durch Verwendung von Auftriebsbefehlen zu steuern, um dem Flugzeug (10, 200, 300, 400) während eines Vertikalflugs mit dem Front- und dem Heckrotor (44, 46) in der Auftriebsposition einen Großteil oder den gesamten vertikalen Auftrieb bereitzustellen; und
um die Anordnung (32, 232, 332, 432) der elektrischen Rotoren (34, 36, 38, 40, 236, 240, 334, 336, 338, 340, 434, 436, 438, 440) durch Verwendung der Stabilitätsbefehle zu steuern, um dem Flugzeug (10, 200, 300, 400) während eines Vertikalflugs Stabilität zu verleihen.

15. Nichtflüchtiges computerlesbares Speichermedium, das nichtflüchtige computerausführbare Anweisungen speichert, die, wenn sie von einem geeigneten Prozessor ausgeführt werden, der sich in Kommunikation mit oder an Bord eines senkrecht startenden und landenden (VTOL-) Flugzeugs (10, 200, 300, 400) befindet, das umfasst eine Flugzeugzelle (12) mit mindestens einer oder mindestens einem Paar Tragfläche(n) (16), die sich entlang einer Querachse erstreckt/en, wobei die Tragfläche(n) (16) funktionell an einem Rumpf (14) angebracht ist bzw. sind, der ein vorderes und ein hinteres Ende (14.1, 14.2) aufweist, die sich über einer Längsachse (A) des Flugzeugs (10, 200, 300, 400) erstrecken, und einem Leitwerk (18, 218, 318), das sich neben dem hinteren Ende (14.2) des Rumpfs (14) befindet, oder einem geeignetem Cancard (450), der sich neben dem vorderen Ende (14.1) des Rumpfs (14) befindet; eine Anordnung (32, 232, 332, 432) von elektrischen Rotoren (34, 36, 38, 40, 236, 240, 334, 336, 338, 340, 434, 436, 438, 440), die an der Flugzeugzelle (12) angebracht sind, um dem Flugzeug (10, 200, 300, 400) einen vertikalen Auftrieb und/oder eine Stabilität zu verleihen, wobei die elektrischen Rotoren (34, 36, 38, 40, 236, 240, 334, 336, 338, 340, 434, 436, 438, 440) fest an der Flugzeugzelle (12) angebracht sind und von einem oder mehreren geeigneten Elektromotoren angetrieben werden; einen Frontrotor (44), der schwenkbar an dem vorderen Ende (14.1) des Rumpfs (14) angebracht ist, wobei der Frontrotor (44) um eine Achse parallel zu der Querachse zwischen einer Auftriebsposition, in der der Frontrotor (44) ausgerichtet ist, um dem Flugzeug (10, 200, 300, 400) für einen Vertikalflug einen vertikalen Auftrieb zu verleihen, und einer Antriebsposition, in der der Frontrotor (44) ausgerichtet ist, um dem Flugzeug (10, 200, 300, 400) für einen Horizontalflug einen Vorwärtsschub zu verleihen, versetzbar ist; und einen Heckrotor (46), der schwenkbar an dem hinteren Ende (14.2) des Rumpfs (14) angebracht ist, wobei der Frontrotor (44) um eine Achse parallel zu der Querachse zwischen einer Auftriebsposition, in der der Heckrotor (46) ausgerichtet ist, um dem Flugzeug (10, 200, 300, 400) für einen Vertikalflug einen vertikalen Auftrieb zu verleihen, und einer Antriebsposition, in der der Heckrotor (46) ausgerichtet ist, um dem Flugzeug (10, 200, 300, 400) für einen Horizontalflug einen Vorwärtsschub zu verleihen, versetzbar ist, wobei einer oder beide von dem Front- und dem Heckrotor (44, 46) durch einen oder mehrere geeignete(n) Verbrennungsmotor(en) angetrieben wird bzw. werden, den mindestens einen Prozessor veranlassen, die Verfahrensschritte nach einem der Ansprüche 10 bis 13 auszuführen.

## Revendications

1. Aéronef à décollage et atterrissage verticaux (ADAV) (10, 200, 300, 400), dans lequel l'aéronef (10, 200, 300, 400) comprend :
une cellule (12) comportant au moins une ou au moins une paire d'aile(s) (16) s'étendant le long d'un axe transversal, la ou les aile(s) (16) étant fixées fonctionnellement à un fuselage (14) ayant des extrémités avant et arrière (14.1, 14.2) s'étendant entre un axe longitudinal (A) de l'aéronef (10, 200, 300, 400) et un empennage approprié (18, 218, 318) situé au voisinage de l'extrémité arrière (14.2) du fuselage (14) ou un empennage canard approprié (450) situé au voisinage de l'extrémité avant (14.1) du fuselage (14) ;
un groupe (32, 232, 332, 432) de rotors électriques (34, 36, 38, 40, 236, 240, 334, 336, 338, 340, 434, 436, 438, 440) montés sur la cellule (12) de façon fonctionnelle pour apporter de la stabilité et/ou une poussée verticale à l'aéronef (10, 200, 300, 400), dans lequel les rotors électriques (34, 36, 38, 40, 236, 240, 334, 336, 338, 340, 434, 436, 438, 440) sont montés de manière fixe sur la cellule (12) et sont entraînés par un ou plusieurs moteurs électriques appropriés ;
un rotor avant (44) monté à pivotement sur l'extrémité avant (14.1) du fuselage (14), le rotor avant (44) pouvant être déplacé autour d'un axe parallèle à l'axe transversal entre une position de levage dans laquelle le rotor avant (44) est orienté de façon à fournir une poussée verticale à l'aéronef (10, 200, 300, 400) pour le vol vertical, et une position de propulsion dans laquelle le rotor avant (44) est orienté de façon à fournir une poussée vers l'avant à l'aéronef (10, 200, 300, 400) pour le vol horizontal ; et
un rotor arrière (46) monté à pivotement sur l'extrémité arrière (14.2) du fuselage (14), le rotor arrière (46) pouvant être déplacé autour d'un axe parallèle à l'axe transversal entre une position de levage dans laquelle le rotor arrière (46) est orienté de façon à fournir une poussée verticale à l'aéronef (10, 200, 300, 400) pour le vol vertical, et une position de propulsion dans laquelle le rotor arrière (46) est orienté de façon à fournir une poussée vers l'avant à l'aéronef (10, 200, 300, 400) pour le vol horizontal, dans lequel un des rotors avant et arrière ou les deux (44, 46) sont entraînés par un ou plusieurs moteurs à combustion interne appropriés, et dans lequel les rotors avant et arrière (44, 46) fournissent une majorité, ou la totalité, de la poussée verticale de l'aéronef (10, 200, 300, 400) au cours du vol vertical avec les rotors avant et arrière (44, 46) dans la position de levage.

2. Aéronef (10, 200, 300, 400) selon la revendication 1, dans lequel le rotor avant (44) est monté à pivotement entre le fuselage (14) et l'empennage canard (450) ; ou dans lequel le rotor arrière (46) est monté à pivotement entre le fuselage (14) et l'empennage (18, 218, 318).

3. Aéronef (10, 200, 300, 400) selon l'une quelconque des revendications précédentes, dans lequel les rotors avant et arrière (44, 46) sont entraînés par un ou des moteur(s) à combustion interne et fournissent une poussée verticale principale à l'aéronef (10, 200, 300, 400), et dans lequel les rotors électriques (34, 36, 38, 40, 236, 240, 334, 336, 338, 340, 434, 436, 438, 440) fournissent une stabilité principale à l'aéronef (10, 200, 300, 400), au moins pendant le vol vertical.

4. Aéronef (10, 200, 300, 400) selon l'une quelconque des revendications précédentes, dans lequel les rotors électriques (34, 36, 38, 40, 236, 240, 334, 336, 338, 340, 434, 436, 438, 440) sont alimentés par une source d'énergie électrique qui est configurée pour alimenter les rotors électriques (34, 36, 38, 40, 236, 240, 334, 336, 338, 340, 434, 436, 438, 440) pendant une durée qui est inférieure à une durée pendant laquelle les rotors avant et arrière (44, 46) peuvent être actionnés par lesdits un ou plusieurs moteur(s) à combustion interne.

5. Aéronef (10, 200, 300, 400) selon l'une quelconque des revendications précédentes, dans lequel chacun des rotors avant et arrière (44, 46) est au moins deux fois plus puissant que l'un des rotors électriques (34, 36, 38, 40, 236, 240, 334, 336, 338, 340, 434, 436, 438, 440) et est entraîné par des moteurs à combustion interne avant et arrière.

6. Aéronef (10, 200, 300, 400) selon l'une quelconque des revendications précédentes, dans lequel une taille ou puissance des moteurs électriques est inversement proportionnelle à la distance qui les sépare d'un centre de gravité de l'aéronef (10, 200, 300, 400).

7. Aéronef (10, 200, 300, 400) selon l'une quelconque des revendications précédentes, dans lequel le groupe (32, 232, 332, 432) de rotors électriques (34, 36, 38, 40, 236, 240, 334, 336, 338, 340, 434, 436, 438, 440) est monté sur la cellule (12) en une configuration espacée, dans laquelle les rotors électriques (34, 36, 38, 40, 236, 240, 334, 336, 338, 340, 434, 436, 438, 440) sont fonctionnellement coplanaires et sont situés dans un premier plan, et dans laquelle les rotors avant et arrière (44, 46) sont situés dans des deuxième et troisième plans qui sont substantiellement coplanaires avec et/ou parallèles au premier plan lorsque les rotors avant et arrière (44, 46) sont mis dans les positions de levage, en utilisation.

8. Aéronef (10, 200, 300, 400) selon l'une quelconque des revendications précédentes, dans lequel les rotors avant et arrière (44, 46) sont montés sur le fuselage (14) via des supports de guidage qui facilitent le guidage des rotors avant et arrière (44, 46).

9. Aéronef (10, 200, 300, 400) selon l'une quelconque des revendications précédentes, dans lequel les rotors avant et arrière (44, 46) sont légèrement décalés par rapport à un axe vertical dans le sens inverse des aiguilles d'une montre autour de l'axe longitudinal (A), vus depuis l'avant de l'aéronef (10, 200, 300, 400).

10. Procédé (60, 70) de commande d'un aéronef à décollage et atterrissage verticaux (ADAV) (10, 200, 300, 400) comprenant une cellule (12) comportant au moins une ou au moins une paire d'aile(s) (16) s'étendant le long d'un axe transversal, la ou les aile(s) (16) étant fixées fonctionnellement à un fuselage (14) ayant des extrémités avant et arrière (14.1, 14.2) s'étendant entre un axe longitudinal (A) de l'aéronef (10, 200, 300, 400) et un empennage approprié (18, 218, 318) situé au voisinage de l'extrémité arrière (14.2) du fuselage (14) ou un empennage canard approprié (450) situé au voisinage de l'extrémité avant (14.1) du fuselage (14) ; un groupe (32, 232, 332, 432) de rotors électriques (34, 36, 38, 40, 236, 240, 334, 336, 338, 340, 434, 436, 438, 440) montés sur la cellule (12) de façon fonctionnelle pour apporter de la stabilité et/ou une poussée verticale à l'aéronef (10, 200, 300, 400), dans lequel les rotors électriques (34, 36, 38, 40, 236, 240, 334, 336, 338, 340, 434, 436, 438, 440) sont montés de manière fixe sur la cellule (12) et sont entraînés par un ou plusieurs moteurs électriques appropriés ; un rotor avant (44) monté à pivotement sur l'extrémité avant (14.1) du fuselage (14), le rotor avant (44) pouvant être déplacé autour d'un axe parallèle à l'axe transversal entre une position de levage dans laquelle le rotor avant (44) est orienté de façon à fournir une poussée verticale à l'aéronef (10, 200, 300, 400) pour le vol vertical, et une position de propulsion dans laquelle le rotor avant (44) est orienté de façon à fournir une poussée vers l'avant à l'aéronef (10, 200, 300, 400) pour le vol horizontal ; et un rotor arrière (46) monté à pivotement sur l'extrémité arrière (14.2) du fuselage (14), le rotor arrière (46) pouvant être déplacé autour d'un axe parallèle à l'axe transversal entre une position de levage dans laquelle le rotor arrière (46) est orienté de façon à fournir une poussée verticale à l'aéronef (10, 200, 300, 400) pour le vol vertical, et une position de propulsion dans laquelle le rotor arrière (46) est orienté de façon à fournir une poussée vers l'avant à l'aéronef (10, 200, 300, 400) pour le vol horizontal, dans lequel un des rotors avant et arrière ou les deux (44, 46) sont entraînés par un ou plusieurs moteurs à combustion interne appropriés, dans lequel le procédé comprend les étapes suivantes :
commander (62) les rotors avant et arrière (44, 46) pour qu'ils puissent être déplacés entre les positions de propulsion pour le vol horizontal et les positions de levage pour le vol vertical ; et
commander (62) les rotors avant et arrière (44, 46) pour fournir une majorité, ou la totalité, de la poussée verticale à l'aéronef (10, 200, 300, 400) au cours du vol vertical avec les rotors avant et arrière (44, 46) dans la position de levage.

11. Procédé (60, 70) selon la revendication 10, dans lequel le procédé (60, 70) comprend les étapes suivantes :
recevoir et/ou intercepter des signaux de commande d'aéronef (72) comprenant des ordres de levage et/ou de stabilité pour commander le levage et/ou la stabilité de l'aéronef (10, 200, 300, 400) au cours du vol vertical ;
commander les rotors avant et arrière (44, 46), en utilisant les ordres de levage, pour fournir une majorité, ou la totalité, de la poussée verticale à l'aéronef (10, 200, 300, 400) au cours du vol vertical, et
commander le groupe (32, 232, 332, 432) de rotors électriques (34, 36, 38, 40, 236, 240, 334, 336, 338, 340, 434, 436, 438, 440) en utilisant les ordres de stabilité pour donner de la stabilité à l'aéronef (10, 200, 300, 400) au cours du vol vertical.

12. Procédé (60, 70) selon la revendication 10 ou 11, dans lequel le groupe (32, 232, 332, 432) de rotors électriques (34, 36, 38, 40, 236, 240, 334, 336, 338, 340, 434, 436, 438, 440) est monté sur la cellule (12) en une configuration espacée, dans laquelle les rotors électriques (34, 36, 38, 40, 236, 240, 334, 336, 338, 340, 434, 436, 438, 440) sont fonctionnellement coplanaires et sont situés dans un premier plan, dans lequel le procédé comprend le fait de déplacer les rotors avant et arrière (44, 46) dans les positions de levage pour le vol vertical, dans lequel, dans les positions de levage, les rotors avant et arrière (44, 46) se trouvent respectivement dans des deuxième et troisième plans qui sont substantiellement coplanaires avec et/ou parallèles au premier plan lorsque les rotors avant et arrière (44, 46) sont mis dans les positions de levage.

13. Procédé (60, 70) selon la revendication 11, dans lequel le procédé comprend le fait de commander les rotors avant et arrière (44, 46) pour qu'ils puissent être déplacés entre les positions de levage et de propulsion en réponse aux ordres de levage déterminés de façon substantiellement simultanée.

14. Système de commande (50) pour commander un aéronef à décollage et atterrissage verticaux (ADAV) (10, 200, 300, 400) comprenant une cellule (12) comportant au moins une ou au moins une paire d'aile(s) (16) s'étendant le long d'un axe transversal, la ou les aile(s) (16) étant fixées fonctionnellement à un fuselage (14) ayant des extrémités avant et arrière (14.1, 14.2) s'étendant entre un axe longitudinal (A) de l'aéronef (10, 200, 300, 400) et un empennage approprié (18, 218, 318) situé au voisinage de l'extrémité arrière (14.2) du fuselage (14) ou un empennage canard (450) situé au voisinage de l'extrémité avant (14.1) du fuselage (14) ; un groupe (32, 232, 332, 432) de rotors électriques (34, 36, 38, 40, 236, 240, 334, 336, 338, 340, 434, 436, 438, 440) montés sur la cellule (12) de façon fonctionnelle pour apporter de la stabilité et/ou une poussée verticale à l'aéronef (10, 200, 300, 400), dans lequel les rotors électriques (34, 36, 38, 40, 236, 240, 334, 336, 338, 340, 434, 436, 438, 440) sont montés de manière fixe sur la cellule (12) et sont entraînés par un ou plusieurs moteurs électriques appropriés ; un rotor avant (44) monté à pivotement sur l'extrémité avant (14.1) du fuselage (14), le rotor avant (44) pouvant être déplacé autour d'un axe parallèle à l'axe transversal entre une position de levage dans laquelle le rotor avant (44) est orienté de façon à fournir une poussée verticale à l'aéronef (10, 200, 300, 400) pour le vol vertical, et une position de propulsion dans laquelle le rotor avant (44) est orienté de façon à fournir une poussée vers l'avant à l'aéronef (10, 200, 300, 400) pour le vol horizontal ; et un rotor arrière (46) monté à pivotement sur l'extrémité arrière (14.2) du fuselage (14), le rotor arrière (46) pouvant être déplacé autour d'un axe parallèle à l'axe transversal entre une position de levage dans laquelle le rotor arrière (46) est orienté de façon à fournir une poussée verticale à l'aéronef (10, 200, 300, 400) pour le vol vertical, et une position de propulsion dans laquelle le rotor arrière (46) est orienté de façon à fournir une poussée vers l'avant à l'aéronef (10, 200, 300, 400) pour le vol horizontal, dans lequel un des rotors avant et arrière ou les deux (44, 46) sont entraînés par un ou plusieurs moteurs à combustion interne appropriés, dans lequel le système de commande comprend :
un dispositif de mémoire (52) ;
un processeur (54) couplé au dispositif de mémoire, le processeur (54) étant configuré pour :
recevoir et/ou intercepter des signaux de commande d'aéronef (72) comprenant des ordres de levage et/ou de stabilité pour commander le levage et/ou la stabilité de l'aéronef (10, 200, 300, 400) au cours du vol vertical ;
commander (62) les rotors avant et arrière (44, 46) pour qu'ils puissent être déplacés entre les positions de propulsion pour le vol horizontal et les positions de levage pour le vol vertical ;
commander (64) les rotors avant et arrière (44, 46) en utilisant les ordres de levage pour fournir une majorité, ou la totalité, de la poussée verticale à l'aéronef (10, 200, 300, 400) au cours du vol vertical avec les rotors avant et arrière (44, 46) dans la position de levage ; et
commander le groupe (32, 232, 332, 432) de rotors électriques (34, 36, 38, 40, 236, 240, 334, 336, 338, 340, 434, 436, 438, 440) en utilisant les ordres de stabilité pour fournir de la stabilité à l'aéronef (10, 200, 300, 400) au cours du vol vertical.

15. Support de stockage non transitoire lisible par ordinateur stockant des instructions non transitoires exécutables par ordinateur qui, lorsqu'elles sont exécutées par un processeur approprié en communication à distance avec ou à bord d'un aéronef à décollage et atterrissage verticaux (ADAV) (10, 200, 300, 400) comprenant une cellule (12) comportant au moins une ou au moins une paire d'aile(s) (16) s'étendant le long d'un axe transversal, la ou les aile(s) (16) étant fixées fonctionnellement à un fuselage (14) ayant des extrémités avant et arrière (14.1, 14.2) s'étendant entre un axe longitudinal (A) de l'aéronef (10, 200, 300, 400) et un empennage (18, 218, 318) situé au voisinage de l'extrémité arrière (14.2) du fuselage (14) ou un empennage canard approprié (450) situé au voisinage de l'extrémité avant (14.1) du fuselage (14) ; un groupe (32, 232, 332, 432) de rotors électriques (34, 36, 38, 40, 236, 240, 334, 336, 338, 340, 434, 436, 438, 440) montés sur la cellule (12) de façon fonctionnelle pour apporter de la stabilité et/ou une poussée verticale à l'aéronef (10, 200, 300, 400), dans lequel les rotors électriques (34, 36, 38, 40, 236, 240, 334, 336, 338, 340, 434, 436, 438, 440) sont montés de manière fixe sur la cellule (12) et sont entraînés par un ou plusieurs moteurs électriques appropriés ; un rotor avant (44) monté à pivotement sur l'extrémité avant (14.1) du fuselage (14), le rotor avant (44) pouvant être déplacé autour d'un axe parallèle à l'axe transversal entre une position de levage dans laquelle le rotor avant (44) est orienté de façon à fournir une poussée verticale à l'aéronef (10, 200, 300, 400) pour le vol vertical, et une position de propulsion dans laquelle le rotor avant (44) est orienté de façon à fournir une poussée vers l'avant à l'aéronef (10, 200, 300, 400) pour le vol horizontal ; et un rotor arrière (46) monté à pivotement sur l'extrémité arrière (14.2) du fuselage (14), le rotor avant (44) pouvant être déplacé autour d'un axe parallèle à l'axe transversal entre une position de levage dans laquelle le rotor arrière (46) est orienté de façon à fournir une poussée verticale à l'aéronef (10, 200, 300, 400) pour le vol vertical, et une position de propulsion dans laquelle le rotor arrière (46) est orienté de façon à fournir une poussée vers l'avant à l'aéronef (10, 200, 300, 400) pour le vol horizontal, dans lequel un des rotors avant et arrière ou les deux (44, 46) sont entraînés par un ou plusieurs moteurs à combustion interne appropriés, font exécuter par ledit au moins processeur les étapes de procédé selon l'une quelconque des revendications 10 à 13.
